# EUROPÄISCHE PATENTSCHRIFT

(11) **EP 0 862 366 B1**
(45) Veröffentlichungstag und Bekanntmachung des Hinweises auf die Patenterteilung: **21.11.2001**
(21) Anmeldenummer: 96932515.8
(22) Anmeldetag: 12.09.1996
(51) Int. Cl.: A01N 43/54

(54) **SCHADPILZBEKÄMPFUNG MIT DER KOMBINATION EINES DIE ATMUNG AM CYTOCHROM-KOMPLEX III HEMMENDEN WIRKSTOFFES MIT FENAZAQUIN**
COMBATTING PARASITIC FUNGI WITH A COMBINATION OF AN ACTIVE AGENT INHIBITING RESPIRATION IN THE CYTOCHROME COMPLEX III AND OF FENAZAQUINE
LUTTE CONTRE DES CHAMPIGNONS NUISIBLES GRACE A L'ASSOCIATION DE LA FENAZAQUINE AVEC UN PRINCIPE ACTIF INHIBANT LA RESPIRATION AU NIVEAU DU COMPLEXE CYTOCHROME III

(30) Priorität: 25.09.1995 DE 19535516
(43) Veröffentlichungstag der Anmeldung: 09.09.1998
(73) Patentinhaber: BASF AKTIENGESELLSCHAFT, 67056 Ludwigshafen (DE)
(72) Erfinder: BAYER, Herbert, D-68159 Mannheim (DE); SAUTER, Hubert, D-68167 Mannheim (DE); AMMERMANN, Eberhard, D-64646 Heppenheim (DE); LORENZ, Gisela, D-67434 Hambach (DE); STRATHMANN, Siegfried, D-67117 Limburgerhof (DE); KÖHLE, Harald, D-67273 Bobenheim (DE); RETZLAFF, Günter, D-67354 Römerberg (DE)
(74) Vertreter: Kinzebach, Werner, Dr.
(86) Internationale Anmeldenummer: EP9604013
(87) Internationale Veröffentlichungsnummer: WO9711606

(56) Entgegenhaltungen:
- EP-A- 0 326 329
- EP-A- 0 642 735
- DATABASE CROPU STN-International STN-accession no. 96-89845, XP002025040 & JP 08 198 719 A (NIPPON-SODA) 6.August 1996 & DATABASE WPI Week 9642 Derwent Publications Ltd., London, GB; AN 96-415240 & CHEMICAL ABSTRACTS, vol. 125, no. 19, 4.November 1996 Columbus, Ohio, US; abstract no. 240852,
- BIOCHEMICAL SOCIETY TRANSACTIONS, Bd. 22, Nr. 1, Februar 1994, Seiten 247-251, XP000617668 P.J.JEWESS: "Insecticides and acaricides which act at the rotenone-binding site of mitochondrial NADH:ubiquinone oxidoreductase; competitive displacement studies using a 3H-labelled rotenone analogue"
- DATABASE CROPU STN-International STN-accession no. 95-81869, U.HAASE ET AL.: "Action mechanism of the strobilurin derivative BAS 490F." XP002025041 & MITT.BIOL.BUNDESANST.LANDFORSTWIRTSCH., Nr. 301, 1994, Seite 411
- DATABASE CROPU STN-International STN-accession no. 95-81855, E.AMMERMANN: "BAS 490 F - a broad-spectrum strobilurin fungicide." XP002025042 & MITT.BIOL.BUNDERSANST.LANDFORSTWIRTSCH., Nr. 301, 1994, Seite 397

## Beschreibung

Die vorliegende Erfindung betrifft Mittel zur Bekämpfung von Schadpilzen sowie Verfahren zur Bekämpfung von Schadpilzen unter Anwendung derartiger Mittel.

Es ist aus der Literatur bekannt, daß Wirkstoffe, die den Cytochrom bc₁ Komplex (Cytochrom Xomplex III) hemmen, als Fungizide eingesetzt werden können [vgl. U. Brandt, U. Haase, H. Schägger, G. von Jagow: "Spezifität und Wirkmechanismus der Strobilurine", Dechema-Monographie Bd. 129, 27-38, VCH Verlagsgesellschaft Weinheim, 1993; J.M. Clough: Natural Product Reports, 1993, 565-574; F. Röhl, H. Sauter: Biochem. Soc. Trans. 22, 635 (1993)].

Bei der Anwendung dieser Wirkstoffe als Fungizide hat sich jedoch gezeigt, daß ihre Wirkung nur vorübergehend ist, d.h. bereits nach einiger Zeit war erneutes Wachstum der Pilze zu beobachten.

Der vorliegenden Erfindung liegt daher die Aufgabe zugrunde, eine verbesserte Möglichkeit zur Bekämpfung von Schadpilzen und insbesondere Botrytis zur Verfügung zu stellen.

Überraschenderweise wurde nun gefunden, daß diese Aufgabe mit einem Mittel gelöst wird, welches einen Wirkstoff, der die Atmung am Cytochrom-Komplex III hemmt, in Kombination mit dem bekannten akarizid wirksamen Fenazaquin (vgl. The Pesticide Manual, 10. Ausgabe, 1994; CAS Reg. Nr. 120928-09-8) enthält.

Gegenstand der vorliegenden Erfindung sind daher Mittel zur Bekämpfung von Schadpilzen, die in einem festen oder flüssigen Träger
a) mindestens einen Wirkstoff I, der die Atmung am Cytochrom-Komplex III hemmt und
b) Fenazaquin der Formel 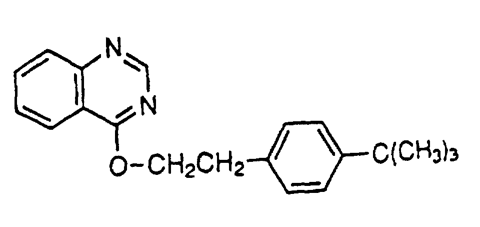 enthalten.

Vorzugsweise handelt es sich bei dem Wirkstoff I um eine Verbindung der Formel IA oder IB: 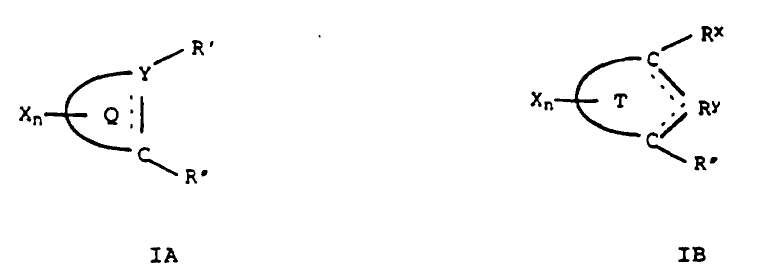 in denen .... für eine Doppel- oder Einfachbindung steht;
- R': für -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃ oder -N(CH₂CH₃)-CO₂CH₃ steht;
- R": für einen organischen Rest, welcher direkt oder über eine Oxy-, Mercapto-, Amino-, oder Alkylaminogruppe gebunden ist, steht oder
zusammen mit einer Gruppe X und dem Ring Q bzw. T, an den sie gebunden sind, ein ggf. substituiertes bicyclisches, partiell oder vollständig ungesättigtes System, welches neben Kohlenstoffringgliedern 1, 2 oder 3 Heteroatome, unabhängig ausgewählt unter Sauerstoff, Schwefel und Stickstoff, enthalten kann;
- R^{x}: für -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃ oder -CH₂C[CONHCH₃]=NOCH₃ steht;
- R^{y}: für Sauerstoff, Schwefel, =CH- oder =N- steht;
- n: für 0, 1, 2 oder 3 steht, wobei die Reste X gleich oder verschieden sein können, wenn n > 1 ist;
- X: für Cyano, Nitro, Halogen, Alkyl, Halogenalkyl, Alkoxy, Halogenalkoxy, Alkylthio steht oder
wenn n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, oxy-C₂-C₄-alkenylen-, Oxy-C₂-C₄-alkenylenoxy- oder Butadiendiylgruppe bedeutet, wobei diese Ketten ihrerseits ein bis drei Reste tragen können, die unabhängig voneinander ausgewählt sind unter Halogen, Alkyl, Halogenalkyl, Alkoxy, Halogenalkoxy und Alkylthio;
- Y: für =C- oder -N- steht;
- Q: für Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl oder Triazinyl steht; und
- T: für Phenyl, Oxazolyl, Thiazolyl, Thiadiazolyl, Oxadiazolyl, Pyridinyl, Pyrimidinyl oder Triazinyl steht.

Bei dem Substituenten R" handelt es sich dabei insbesondere um einen Alkyl-, Alkenyl-, Alkinyl-, Aryl-, Hetaryl-, Arylalkyl-, Hetarylalkyl-, Arylalkenyl-, Hetarylalkenyl-, Arylalkinyl oder Hetarylalkinylrest, der ggf. von einer oder mehreren Gruppen unterbrochen ist, die ausgewählt sind unter O, S, SO, SO₂, NR (R = H oder Alkyl), CO, COO, OCO, CONH, NHCO und NHCONH oder um einen Rest der wie unten definierten Formeln CH₂ON = CR^{α}CR^{β} oder CH₂ON = CR⁸CR^{δ} = NOR^{ε.} Gegebenenfalls weisen diese Reste auch einen oder mehrere (vorzugsweise 1, 2 oder 3) Substituenten auf, die unabhängig voneinander ausgewählt sind unter Alkyl, Alkoxy, Halogen, Halogenalkyl (insbesondere CF₃ und CHF₂) und Aryl. Letzteres kann seinerseits wieder 1, 2 oder 3 Substituenten aufweisen, die unabhängig voneinander ausgewählt sind unter Halogen, Halogenalkyl (insbesondere CF₃ und CHF₂), Phenyl, CN und Phenoxy.

Derartige Verbindungen und ihre Herstellung sind in der Literatur beschrieben, die in den nachfolgenden Tabellen I.1 bis I.8 angegeben ist. Dort nicht beschriebene Verbindungen können analog hergestellt werden.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte C₁-C₁₂-Alkyl- und insbesondere C₁-C₆-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethyl/-oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio und Halogenalkylthio oder entsprechenden Gruppen.

Die Alkenylgruppe umfaßt geradkettige und verzweigte Alkenylgruppen. Vorzugsweise handelt es sich dabei um geradkettige oder verzweigte C₃-C₁₂-Alkenylgruppen und insbesondere C₃-C₆-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1 bis 3 Halogenatome auf.

Die Alkinylgruppe umfaßt geradkettige und verzweigte Alkinylgruppen. Vorzugsweise handelt es sich dabei um geradkettige und verzweigte C₃-C₁₂-Alkinylgruppen und insbesondere C₃-C₆-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine C₃-C₆-Cycloalkylgruppe, wie Cyclopropyl, Cyclobutyl, Cyclopentyl oder Cyclohexyl. Wenn die Cycloalkylgruppe substituiert ist, weist sie vorzugsweise 1 bis 3 C₁-C₄-Alkylreste als Substituenten auf.

Cycloalkenyl steht vorzugsweise für eine C₄-C₆-Cycloalkenylgruppe, wie Cyclobutenyl, Cyclopentenyl oder Cyclohexenyl. Wenn die Cycloalkenylgruppe substituiert ist, weist sie vorzugweise 1 bis 3 C₁-C₄-Alkylreste als Substituenten auf.

Bei einer Cycloalkoxygruppe handelt es sich vorzugsweise um eine C₅-C₆-Cycloalkoxygruppe, wie Cyclopentyloxy oder Cyclohexyloxy. Wenn die Cycloalkoxygruppe substituiert ist, weist sie vorzugsweise 1 bis 3 C₁-C₄-Alkylreste als Substituenten auf.

Bei der Cycloalkenyloxygruppe handelt es sich vorzugsweise um eine C₅-C₆-Cycloalkenyloxygruppe, wie Cyclopentyloxy oder Cyclohexyloxy. Wenn die Cycloalkenyloxygruppe substituiert ist, weist sie vorzugsweise 1 bis 3 C₁-C₄-Alkylreste als Substituenten auf.

Aryl steht vorzugsweise für Phenyl.

Hetaryl steht vorzugsweise für einen 5- oder 6-gliedrigen aromatischen Heterocyclus, der 1, 2 oder 3 Heteroatome aufweist, die unabhängig voneinander ausgewählt sind unter N, O und S. Insbesondere handelt es sich dabei um Pyridinyl, Pyrimidinyl, Thiazolyl oder Pyrazolyl.

Heterocyclyl steht vorzugsweise für einen 5- oder 6-gliedrigen, gesättigten oder ungesättigten Heterocyclus, der 1, 2 oder 3 Heteroatome aufweist, die unabhängig voneinander ausgewählt sind unter N, O und S. Insbesondere handelt es sich dabei um die Dihydro-, Tetrahydro- und Hexahydroderivate der unter "Hetaryl genannten Reste. Bevorzugt sind Pyrrolidinyl, Tetrahydrofuranyl, Imidazolidinyl, Pyrazolidinyl, Oxazolidinyl, Isoxazolidinyl, Thiazolidinyl, Isothiazolidinyl, Piperidinyl oder Morpholinyl.

Gemäß einer bevorzugten Ausführungsform enthalten die erfindungsgemäßen Mittel eine Verbindung der Formel IA oder IB, worin R" für Aryloxy, Hetaryloxy, Aryloxymethylen, Hetaryloxymethylen, Arylethenylen oder Hetarylethenylen steht, wobei diese Reste gegebenenfalls 1, 2 oder 3 Substituenten aufweisen, die unabhängig voneinander ausgewählt sind unter Alkyl, Halogen, CF₃, CHF₂, CN, Alkoxy und Phenyl, das seinerseits 1, 2 oder 3 Substituenten aufweisen kann, die unabhängig voneinander ausgewählt sind unter Halogen, CF₃, CHF₂, Phenyl, CN, Phenoxy, Alkyl, Alkoxy und Halogenalkoxy;
oder R" für

CH₂ON=CR^{α}R^{β} oder CH₂ON=CR^{γ} CR^{δ}=NOR^{ε}

steht,
wobei R^{α} für Alkyl steht;
R^{β} für Phenyl, Pyridyl oder Pyrimidyl steht, das gegebenenfalls 1, 2 oder 3 Substituenten aufweist, die unabhängig voneinander ausgewählt sind unter Alkyl, Alkoxy, Halogen, Halogenalkoxy, CF₃ und CHF₂;
R^{γ} für Alkyl, Alkoxy, Halogen, Halogenalkyl oder Wasserstoff steht;
   - Rδ: für Wasserstoff, Cyano, Halogen, Alkyl, Alkoxy, Alkylthio, Alkylamino, Di-Alkylamino, Alkenyl, Alkenyloxy, Alkenylthio, Alkenylamino, N-Alkenyl-N-alkylamino, Alkinyl, Alkinyloxy, Alkinylthio, Alkinylamino, N-Alkinyl-N-alkylamino, wobei die Kohlenwasserstoffreste dieser Gruppen partiell oder vollständig halogeniert sein können und/ oder 1, 2 oder 3 Reste tragen können, die unabhängig ausgewählt sind unter Cyano, Nitro, Hydroxy, Alkoxy, Halogenalkoxy, Alkoxycarbonyl, Alkylthio, Alkylamino, Di-alkylamino, Alkenyloxy, Cycloalkyl, Cycloalkyloxy, Heterocyclyl, Heterocyclyloxy, Aryl, Aryloxy, Aryl-alkoxy, Hetaryl, Hetaryloxy und Hetarylalkoxy, wobei die cyclischen Reste ihrerseits partiell oder vollständig halogeniert sein können und/oder 1, 2 oder 3 Gruppen tragen können, die unabhängig ausgewählt sind unter Cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl und Alkenyloxy;
   oder
   für Cycloalkyl, Cycloalkyloxy, Cycloalkylthio, Cycloalkylamino, N-Cycloalkyl-N-alkylamino, Heterocyclyl, Heterocyclyloxy, Heterocyclylthio, Heterocyclylamino, N-Heterocyclyl-N-alkylamino, Aryl, Aryloxy, Arylthio, Arylamino, N-Aryl-N-alkylamino, Hetaryl, Hetaryloxy, Hetarylthio, Hetarylamino oder N-Hetaryl-N-alkylamino steht, wobei die cyclischen Reste partiell oder vollständig halogeniert sein können und/oder 1, 2 oder 3 Gruppen tragen können, die unabhängig ausgewählt sind unter Cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl, Alkenyloxy, Benzyl, Benzyloxy, Aryl, Aryloxy, Hetaryl und Hetaryloxy, wobei die aromatischen Reste ihrerseits partiell oder vollständig halogeniert sein können und/oder 1, 2 oder 3 der folgenden Gruppen tragen können: Cyano, Alkyl, Halogenalkyl, Alkoxy, Nitro;
R^{ε} für Alkyl, Alkenyl oder Alkinyl steht, wobei diese Gruppen partiell oder vollständig halogeniert ein können und/oder 1, 2 oder 3 der folgenden Reste tragen können: Cyano, Alkoxy, Cycloalkyl.

Besonders bevorzugt sind Verbindungen der Formel IA oder IB, worin
R" eine der folgenden Bedeutungen besitzt:
a) Phenyloxymethylen, Pyridinyloxymethylen, Pyrimidinyloxymethylen oder Pyrazolyloxymethylen, wobei der aromatische Rest gegebenenfalls 1, 2 oder 3 Substituenten aufweist, die unabhängig voneinander ausgewählt sind unter Alkyl, Halogen, CF₃, CHF₂,
   -C(CH₃)=NOCH₃, und Phenyl, das gegebenenfalls mit 1, 2 oder 3 Halogenatomen und/oder Alkylgruppen substituiert ist;
b) Phenoxy oder Pyrimidinyloxy, das gegebenenfalls mit 1, 2 oder 3 Halogenatomen oder einem Phenoxyrest, der gegebenenfalls einen Halogen- oder Cyanosubstituenten aufweist, substituiert ist;
c) Phenylethenylen oder Pyrazolylethenylen, wobei der Phenyl- oder Pyrazolylrest gegebenenfalls 1, 2 oder 3 Substituenten aufweist, die unabhängig voneinander ausgewählt sind unter Halogen, CF₃, CHF₂ und Phenyl.
d) CH₂ON=CR^{α}R^{β,}
   worin R^{α} für Alkyl steht; und
   R^{β} für Phenyl, das gegebenenfalls 1, 2 oder 3 Substituenten aufweist, die unabhängig voneinander augewählt sind unter Alkyl, Halogen, CF₃ und CHF₂, oder für Pyrimidinyl steht, das gegebenenfalls durch 1 oder 2 Alkoxyreste substituiert ist;
e) CH₂ON=CR^{γ}CR^{δ}=NOR^{ε},
   worin R^{γ} für Alkyl, Alkoxy oder Halogen steht; R^{δ} für Alkyl, Cyano, Halogen, Alkoxy, Alkenyl oder Phenyl, das gegebenenfalls durch 1, 2 oder 3 Halogenatome substituiert ist, steht; und
   R^{ε} für Alkyl steht.

Insbesondere bevorzugt sind Verbindungen der Formel IA, worin Q für Phenyl steht und n für 0 steht.

Besonders geeignete Wirkstoffe I sind in den nachfolgenden Tabellen zusammengestellt.

**Tabelle I.1A**

| Verbindungen der Formel IA, in denen Q Phenyl bedeutet, R' für -C(CO₂CH₃)=CHOCH₃ steht, n den Wert 0 hat, R" für ggf. substituiertes (Het)aryl-oxymethylen steht, wobei die ggf. substituierte (Het)arylgruppe die folgende Bedeutung hat | | |
|---|---|---|
| Nr. | ggf. subst. (Het)aryl | Literatur |
| I.1A-1 | 2-CH₃-C₆H₄ | EP-A 226 917 |
| I.1A-2 | 2,5-(CH₃)₂-C₆H₃ | EP-A 226 917 |
| I.1A-3 | 2-CH₃, 4-C[CH₃]=NOCH₃-C₆H₃ | EP-A 386 561 |
| I.1A-4 | 2-CH₂CH₂CH₃, 6-CF₃-pyrimidin-4-yl | EP-A 407 873 |
| I.1A-5 | 2,4-(CH₃)₂-C₆H₃ | EP-A 226 917 |

**Tabelle I.1B:**

| Verbindungen der Formel IA, in denen R' für -C(CO₂CH₃)=CHOCH₃ steht, Q Phenyl bedeutet, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.1B-1 | C₆H₅ | EP-A 178 826 |
| I.1B-2 | 6-[2-CN-C₆H₄-O]-pyrimidin-4-yl | EP-A 382 375 |

**Tabelle I.1C:**

| Verbindungen der Formel IA, in denen R' für -C(CO₂CH₃)=CHOCH₃ steht, Q Phenyl bedeutet, n den Wert 0 hat, R" für ggf. subst. (Het)aryl-ethenylen steht, wobei die ggf. subst. (Het)arylgruppe die folgende Bedeutung hat | | |
|---|---|---|
| Nr. | ggf. subst. (Het)aryl | Literatur |
| I.1C-1 | 1-(2,4-Cl₂-C₆H₃), 5-CF₃-pyrazol-4-yl | EP-A 528 245 |
| I.1C-2 | 1-(4-Cl-C₆H₄)-pyrazol-4-yl | EP-A 378 755 |
| I.1C-3 | 3-CF₃-C₆H₄ | EP-A 203 606 |
| I.1C-4 | 3-Cl-C₆H₄ | EP-A 203 606 |
| I.1C-5 | 4-C₆H₅-C₆H₄ | EP-A 203 606 |

**Tabelle I.1D:**

| Verbindungen der Formel IA, in denen Q Phenyl bedeutet, R' für -C(CO₂CH₃)=CHOCH₃ steht, n den Wert 0 hat, R" für CH₂ON=CR^{α}R^{β} steht, wobei R^{α} und R^{β} die folgende Bedeutung haben | | | |
|---|---|---|---|
| Nr. | R^{α} | R^{β} | Literatur |
| I.1D-1 | CH₃ | 4-Cl-C₆H₄ | EP-A 370 629 |
| I.1D-2 | CH₃ | 3-CF₃-C₆H₄ | EP-A 370 629 |
| I.1D-3 | CH3 | 4-OCH₂CH₃-pyrimidin-2-yl | WO-A 92/18,487 |

**Tabelle I.1E:**

| Verbindungen der Formel IA, in denen Q Phenyl bedeutet, R' für -C(CO₂CH₃)=CHOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |
|---|---|---|---|---|
| Nr. | R^{γ} | R^{δ} | R^{ε} | Literatur |
| I.1E-1 | CH₃ | CH₃ | CH₃ | WO-A 95/21153 |
| I.1E-2 | CH₃ | CH₃ | CH₂CH₃ | WO-A 95/21153 |
| I.1E-3 | CH₃ | C₆H₅ | CH₃ | WO-A 95/21153 |
| I.1E-4 | CH₃ | C₆H₅ | CH₂CH₃ | WO-A 95/21153 |
| I.1E-5 | CH₃ | 4-Cl-C₆H₄ | CH₃ | WO-A 95/21153 |
| I.1E-6 | CH₃ | 4-Cl-C₆H₄ | CH₂CH₃ | WO-A 95/21153 |

**Tabelle I.2A:**

| Verbindungen der Formel IA, in denen Q Phenyl bedeutet, R' für -C(CO₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.2A-1 | 2-CH₃-C₆H₄ | EP-A 253 213 |
| I.2A-2 | 2,5-(CH₃)₂-C₆H₃ | EP-A 400 417 |
| I.2A-3 | 2,4-(CH₃)₂-C₆H₃ | EP-A 400 417 |
| I.2A-4 | 2,3,5-(CH₃)₃-C₆H₂ | EP-A 400 417 |
| I.2A-5 | 2-Cl, 5-CH₃-C₆H₃ | EP-A 400 417 |
| I.1A-6 | 2-CH₃, 4-C[CH₃]=NOCH₃-C₆H₃ | EP-A 386 561 |

**Tabelle I.2B:**

| Verbindungen der Formel IA, in denen Q Phenyl bedeutet, R' für -C(CO₂CH₃)=NOCH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.2B-1 | C₆H₅ | EP-A 253 213 |
| I.2B-2 | 6-[2-CN-C₆H₄-O]-pyrimidin-4-yl | EP-A 468 684 |

**Tabelle I.2C:**

| Verbindungen der Formel IA, in denen Q Phenyl bedeutet, R' für -C(CO₂CH₃)=NOCH₃ steht, n den Wert 0 hat, R" für CH₂ON=CR^{α}R^{β} steht, wobei R^{α} und R^{β} die folgende Bedeutung haben | | | |
|---|---|---|---|
| Nr. | R^{α} | R^{β} | Literatur |
| I.2C-1 | CH₃ | 4-Cl-C₆H₄ | EP-A 463 488 |
| I.2C-2 | CH₃ | 3-Cl-C₆H₄ | EP-A 463 488 |
| I.2C-3 | CH₃ | 4-CF₃-C₆H₄ | EP-A 463 488 |
| I.2C-4 | CH₃ | 3-CF₃-C₆H₄ | EP-A 463 488 |
| I.2C-5 | CH₃ | 4-CH₃-C₆H₄ | EP-A 463 488 |
| I.2C-6 | CH₃ | 4-OCH₂CH₃-pyrimidin-2-yl | EP-A 472 300 |
| I.2C-7 | CH₃ | 3,5-Cl₂-C₆H₃ | EP-A 463 488 |

**Tabelle I.2D:**

| Verbindungen der Formel IA, in denen Q Phenyl bedeutet, R' für -C(CO₂CH₃)=NOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |
|---|---|---|---|---|
| Nr. | R^{γ} | R^{δ} | R^{ε} | Literatur |
| I.2D-1 | CH₃ | CH₃ | CH₃ | WO-A 95/21153 |
| I.2D-2 | CH₃ | CH₃ | CH₂CH₃ | WO-A 95/21153 |
| I.2D-3 | CH₃ | C₆H₅ | CH₃ | WO-A 95/21153 |
| I.2D-4 | CH₃ | C₆H₅ | CH₂CH₃ | WO-A 95/21153 |
| I.2D-5 | CH₃ | 4-Cl-C₆H₄ | CH₃ | WO-A 95/21153 |
| I.2D-6 | CH₃ | 4-Cl-C₆H₄ | CH₂CH₃ | WO-A 95/21153 |

**Tabelle I.3A:**

| Verbindungen der Formel IA, in denen Q Phenyl bedeutet, R' für -C(CONHCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.3A-1 | 2-CH₃-C₆H₄ | EP-A 477 631 |
| I.3A-2 | 2,5-(CH₃)₂-C₆H₃ | EP-A 477 631 |
| I.3A-3 | 2,4-(CH₃)₂-C₆H₃ | EP-A 477 631 |
| I.3A-4 | 2,3,5-(CH₃)₃-C₆H₂ | EP-A 477 631 |
| I.3A-5 | 2-CH₃, 4-C[CH₃]=NOCH₃-C₆H₃ | EP-A 579 124 |
| I.3A-6 | 1-[4-Cl-C₆H₄]-pyrazol-3-yl | WO-A 94/19331 |
| I.3A-7 | 1-[2,4-Cl₂-C₆H₃]-pyrazol-3-yl | WO-A 94/19331 |

**Tabelle I.3B:**

| Verbindungen der Formel IA, in denen Q Phenyl bedeutet, R' für -C(CONHCH₃)=NOCH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.3B-1 | C₆H₅ | EP-A 398 692 |
| I.3B-2 | 6-[2-CN-C₆H₄-O]-pyrimidin-4-yl | GB-A 2 253 624 |

**Tabelle I.3C:**

| Verbindungen der Formel IA, in denen Q Phenyl bedeutet, R' für -C(CONHCH₃)=NOCH₃ steht, n den Wert 0 hat, R" für ggf. subst. (Het)aryl-ethenylen steht, wobei die ggf. subst. (Het)arylgruppe die folgende Bedeutung hat | | |
|---|---|---|
| Nr. | ggf. subst. (Het)aryl | Literatur |
| I.3C-1 | 1-[2,4-Cl₂-C₆H₃], 5-CF₃-pyrazol-4-yl | DE-A 44 23 615.8 |

**Tabelle I.3D:**

| Verbindungen der Formel IA, in denen Q Phenyl bedeutet, R' für -C(CONHCH₃)=NOCH₃ steht, n den Wert 0 hat, R" für CH₂ON=CR^{α}R^{β} steht, wobei R^{α} und R^{β} die folgende Bedeutung haben | | | |
|---|---|---|---|
| Nr. | R^{α} | R^{β} | Literatur |
| I.3D-1 | CH₃ | 4-Cl-C₆H₄ | EP-A 463 488 |
| I.3D-2 | CH₃ | 3-Cl₃-C₆H₄ | EP-A 463 488 |
| I.3D-3 | CH₃ | 4-CF₃-C₆H₄ | EP-A 585 751 |
| I.3D-4 | CH₃ | 3-CF₃-C₆H₄ | EP-A 585 751 |
| I.3D-5 | CH₃ | 4-CH₃-C₆H₄ | EP-A 463 488 |
| I.3D-6 | CH₃ | 3,5-Cl₂-C₆H₃ | EP-A 463 488 |
| I.3D-7 | CH₃ | 2-OCH₂CH₃-pyrimidin-2-yl | WO-A 92/13,830 |

**Tabelle I.3E:**

| Verbindungen der Formel IA, in denen Q Phenyl bedeutet, R' für -C(CONHCH₃)=NOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |
|---|---|---|---|---|
| Nr. | R^{γ} | R^{δ} | R^{ε} | Literatur |
| I.3E-1 | CH₃ | CH₃ | CH₃ | WO-A 95/21154 |
| I.3E-2 | CH₃ | CH₃ | CH₂CH₃ | WO-A 95/21154 |
| I.3E-3 | CH₃ | C₆H₅ | CH₃ | WO-A 95/21154 |
| I.3E-4 | CH3 | C₆H₅ | CH₂CH₃ | WO-A 95/21154 |
| I.3E-5 | CH₃ | 4-Cl-C₆H₄ | CH₃ | WO-A 95/21154 |
| I.3E-6 | CH₃ | 4-Cl-C₆H₄ | CH₂CH₃ | WO-A 95/21154 |
| I.3E-7 | CH₃ | 4-F-C₆H₄ | CH₃ | WO-A 95/21154 |

**Tabelle I.4A:**

| Verbindungen der Formel IA, in denen Q Phenyl bedeutet, R' für -C(CO₂CH₃)=CHCH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.4A-1 | 2-CH₃-C₆H₄ | EP-A 280 185 |
| I.4A-2 | 2,5-(CH₃)₂-C₆H₃ | EP-A 513 580 |
| I.4A-3 | 2,4-(CH₃)₂-C₆H₃ | EP-A 513 580 |
| I.4A-4 | 2,3,5-(CH₃)₃-C₆H₂ | EP-A 513 580 |
| I.4A-5 | 2-Cl, 5-CH₃-C₆H₃ | EP-A 513 580 |
| I.4A-6 | 2-CH₃, 4-C[CH₃]=NOCH₃-C₆H₃ | EP-A 513 580 |
| I.4A-7 | 1-[4-Cl-C₆H₄]-pyrazol-3-yl | DE-A 44 15 483.6 |

**Tabelle I.4B:**

| Verbindungen der Formel IA, in denen Q Phenyl bedeutet, R' für -C(CO₂CH₃)=CHCH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.4B-1 | C₆H₅ | EP-A 513 580 |

**Tabelle I.4C:**

| Verbindungen der Formel IA, in denen Q Phenyl bedeutet, R' für -C(CO₂CH₃)=CHCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |
|---|---|---|---|---|
| Nr. | R^{γ} | R^{δ} | R^{ε} | Literatur |
| I.4C-1 | CH₃ | CH₃ | CH₃ | WO-A 95/21153 |
| I.4C-2 | CH₃ | CH₃ | CH₂CH₃ | WO-A 95/21153 |
| I.4C-3 | CH₃ | C₆H₅ | CH₃ | WO-A 95/21153 |
| I.4C-4 | CH₃ | C₆H₅ | CH₂CH₃ | WO-A 95/21153 |
| I.4C-5 | CH₃ | 4-Cl-C₆H₄ | CH₃ | WO-A 95/21153 |
| I.4C-6 | CH₃ | 4-Cl-C₆H₄ | CH₂CH₃ | WO-A 95/21153 |

**Tabelle I.5A:**

| Verbindungen der Formel IA, in denen Q Phenyl bedeutet, R' für -C(CO₂CH₃)=CHCH₂CH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.5A-1 | 2-CH₃-C₆H₄ | EP-A 513 580 |
| I.5A-2 | 2,5-(CH₃)₂-C₆H₃ | EP-A 513 580 |
| I.5A-3 | 2,4-(CH₃)₂-C₆H₃ | EP-A 513 580 |
| I.5A-4 | 2,3,5-(CH₃)₃-C₆H₂ | EP-A 513 580 |
| I.5A-5 | 2-C1, 5-CH₃-C₆H₃ | EP-A 513 580 |
| I.5A-6 | 2-CH₃, 4-C[CH₃]=NOCH₃-C₆H₃ | EP-A 513 580 |

**Tabelle I.5B:**

| Verbindungen der Formel IA, in denen Q Phenyl bedeutet, R' für -C(CO₂CH₃)=CHCH₂CH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.5B-1 | C₆H₅ | EP-A 513 580 |

**Tabelle I.5C:**

| Verbindungen der Formel IA, in denen Q Phenyl bedeutet, R' für -C(CO₂CH₃)=CHCH₂CH₃ steht, n den Wert 0 hat, R" für CH₂ON=CR^{γ} CR^{δ}=NOR^{ε} steht, wobei R^{γ}, R^{δ} und R^{ε} die folgende Bedeutung haben | | | | |
|---|---|---|---|---|
| Nr. | R^{γ} | R^{δ} | R^{ε} | Literatur |
| I.5C-1 | CH₃ | CH₃ | CH₃ | WO-A 95/ 21153 |
| I.5C-2 | CH₃ | CH₃ | CH₂CH₃ | WO-A 95/21153 |
| I.5C-3 | CH₃ | C₆H₅ | CH₃ | WO-A 95/21153 |
| I.5C-4 | CH₃ | C₆H₅ | CH₂CH₃ | WO-A 95/21153 |
| I.5C-5 | CH₃ | 4-Cl-C₆H₄ | CH₃ | WO-A 95/21153 |
| I.5C-6 | CH₃ | 4-Cl-C₆H₄ | CH₂CH₃ | WO-A 95/21153 |

**Tabelle I.6A**

| Verbindungen der Formel IA, in denen Q Phenyl bedeutet, R' für -C(COCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.6A-1 | 2-CH₃-C₆H₄ | EP-A 498 188 |
| I.6A-2 | 2,5-(CH₃)₂-C₆H₃ | EP-A 498 188 |
| I.6A-3 | 2,4-(CH₃)₂-C₆H₃ | EP-A 498 188 |
| I.6A-4 | 2,3,5-(CH₃)₃-C₆H₂ | EP-A 498 188 |
| I.6A-5 | 2-CH₃, 4-C[CH₃]=NOCH₃-C₆H₃ | EP-A 498 188 |

**Tabelle I.6B:**

| Verbindungen der Formel IA, in denen Q Phenyl bedeutet, R' für -C(COCH₃)=NOCH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.6B-1 | C₆H₅ | EP-A 498 188 |
| I.6B-2 | 6-[2-CN-C₆H₄-O]-pyrimidin-4-yl | EP-A 498 188 |

**Tabelle I.7A:**

| Verbindungen der Formel IA, in denen Q Phenyl bedeutet, R' für -C(COCH₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.7A-1 | 2-CH₃-C₆H₄ | EP-A 498 188 |
| I.7A-2 | 2,5-(CH₃)₂-C₆H₃ | EP-A 498 188 |
| I.7A-3 | 2,4-(CH₃)₂-C₆H₃ | EP-A 498 188 |
| I.7A-4 | 2,3,5-(CH₃)₃-C₆H₂ | EP-A 498 188 |
| I.7A-5 | 2-CH₃, 4-C[CH₃]=NOCH₃-C₆H₃ | EP-A 498 188 |

**Tabelle I.7B:**

| Verbindungen der Formel IA, in denen Q Phenyl bedeutet, R' für -C(COCH₂CH₃)=NOCH₃ steht, n den Wert 0 hat, R" für ggf. subst. (Het)aryl-oxy steht, wobei die ggf. subst. (Het)arylgruppe die folgende Bedeutung hat | | |
|---|---|---|
| Nr. | ggf. subst. (Het)aryl | Literatur |
| I.7B-1 | C₆H₅ | EP-A 498 188 |
| I.7B-2 | 6-[2-CN-C₆H₄-O]-pyrimidin-4-yl | EP-A 498 188 |

**Tabelle I.8A:**

| Verbindungen der Formel IA, in denen Q Phenyl bedeutet, R' für -N(OCH₃)-CO₂CH₃ steht, n den Wert 0 hat, R" für ggf. subst. (Het)aryl-oxymethylen steht, wobei die ggf. subst. (Het)arylgruppe die folgende Bedeutung hat | | |
|---|---|---|
| Nr. | ggf. subst. (Het)aryl | Literatur |
| I.8A-1 | 2-CH₃-C₆H₄ | WO-A 93/15,046 |
| I.8A-2 | 2,5-(CH₃)₂-C₆H₃ | WO-A 93/15,046 |
| I.8A-3 | 2,4-(CH₃)₂-C₆H₃ | WO-A 93/15,046 |
| I.8A-4 | 2,3,5-(CH₃)₃-C₆H₂ | WO-A 93/15,046 |
| I.8A-5 | 2-Cl, 5-CH₃-C₆H₃ | WO-A 93/15,046 |
| I.8A-6 | 2-CH₃, 4-C[CH₃]=NOCH₃-C₆H₃ | WO-A 93/15,046 |
| I.8A-7 | 2-CH₃, 4-C[CH₃]=NOCH₂CH₃-C₆H₃ | WO-A 93/15,046 |
| I.8A-8 | 2-CH₃, 4-C[CH₂CH₃]=NOCH₃-C₆H₃ | WO-A 93/15,046 |
| I.8A-9 | 2-CH₃, 4-C[CH₂CH₃]=NOCH₂CH₃-C₆H₃ | WO-A 93/15,046 |
| I.8A-10 | 1-[4-Cl-C₆H₄]-pyrazol-3-yl | DE-A 44 23 612.3 |

**Tabelle I.8B:**

| Verbindungen der Formel IA, in denen Q Phenyl bedeutet, R' für -N(OCH₃)=CO₂CH₃ steht, n den Wert 0 hat, R" für CH₂ON=CR^{α}R^{β} steht, wobei R^{α} und R^{β} die folgende Bedeutung haben | | | |
|---|---|---|---|
| Nr. | R^{α} | R^{β} | Literatur |
| I.8B-1 | CH₃ | 3,5-Cl₂-C₆H₃ | WO-A 93/15,046 |

Um die synergistische Wirkung zu entfalten, setzt man Fenazaquin und den Wirkstoff I in einem Gewichtsverhältnis ein, das im Bereich von 20:1 bis 1:20, insbesondere 10:1 bis 1:10, liegt.

Gegenstand der Erfindung ist auch ein Verfahren zur Bekämpfung von Schadpilzen, das dadurch gekennzeichnet ist, daß man die Pilze, deren Lebensraum oder die vor Pilzbefall zu schützenden Materialien, Pflanzen, Samen, Böden, Flächen oder Räume mit einem wie oben definierten Mittel behandelt, wobei die Anwendung der Wirkstoffe gleichzeitig, und zwar gemeinsam oder getrennt, oder nacheinander erfolgen kann.

Die erfindungsgemäßen Mittel können beispielsweise in Form von direkt versprühbaren Lösungen, Pulvern Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Normalerweise werden die Pflanzen mit den Wirkstoffen besprüht oder bestäubt oder die Samen der Pflanzen mit den Wirkstoffen behandelt.

Die Formulierungen werden in bekannter Weise hergestellt; z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Waser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole, sowie Fettalkoholglykolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenylether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Beispiele für solche Zubereitungen, welche die Wirkstoffe im Gewichtsverhältnis von 1:1 enthalten, sind:
I. eine Lösung aus 90 Gew.-Teilen der Wirkstoffe und 10 Gew.-Teilen N-Methylpyrrolidon, die zur Anwendung in Form kleinster Tropfen geeignet ist;
II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;
III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;
IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;
V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;
VI. eine innige Mischung aus 3 Gew.-Teilen der Wirkstoffe und 97 Gew.-Teilen feinteiligem Kaolin; dieses Stäubemittel enthält 3 Gew.-% Wirkstoff;
VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;
VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;
IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die erfindungsgemäßen Mittel zeichnen sich durch eine hervorragende Wirksamkeit gegen ein breites Spektrum von pflanzenpathogenen Pilzen, insbesondere gegen Botrytis aus. Sie sind zum Teil systemisch wirksam, (d.h. sie können von der behandelten Pflanze ohne Wirkungsverlust aufgenommen und gegebenenfalls in der Pflanze transportiert werden) und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Mittel werden angewendet, indem man die Pilze oder die vor Pilzbefall zu schützenden Saatgüter, Pflanzen, Materialien oder den Erdboden mit einer fungizid wirksamen Menge der Wirkstoffe behandelt.

Die Anwendung erfolgt vor oder nach der Infektion der Materialien, Pflanzen oder Samen durch die Pilze.

Speziell eignen sich die Mittel zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Fusarium- und Verticillium-Arten an verschiedenen Pflanzen, Alternaria-Arten an Gemüse und Obst,
Monilinia-Arten in Obst,
Sclerotinia-Arten in Raps und Gemüse.

Die Anwendung gegen Botrytis ist bevorzugt.

Die Mittel können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise 0,01 bis 10 g je Kilogramm Saatgut benötigt.

Die erfindungsgemäßen Mittel können in der Anwendungsform als Fungizide auch andere Wirkstoffe enthalten, z.B. Herbizide, Insektizide, Wachstumsregulatoren, Fungizide oder auch Düngemittel.

Beim Vermischen mit Fungiziden erhält man dabei in vielen Fällen eine Vergrößerung des fungiziden Wirkungsspektrums.

Die folgende Liste von Fungiziden, mit denen die erfindungsgemäβen Verbindungen gemeinsam angewendet werden können, soll die Kombinationsmöglichkeiten erläutern, nicht aber einschränken:
Schwefel,
Dithiocarbonate und deren Derivate, wie
Ferridimethyldithiocarbamat,
Zinkdimethyldithiocarbamat,
Zinkethylenbisdithiocarbamat,
Manganethylenbisdithiocarbamat,
Mangan-Zink-ethylendiamin-bis-dithiocarbamat,
Tetramethylthiuramdisulfid,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat),
N,N'-Polypropylen-bis(thiocarbamoyl)-disulfid,
Nitroderivate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat,
5-Nitro-isophthalsäure-di-isopropylester:
heterocyclische Substanzen, wie
2-Heptadecyl-2-imidazolin-acetat,
2,4-Dichlor-6-(o-chloranilino)-s-triazin,
O,O-Diethyl-phthalimidophosphonothioat,
5-Amino-1-[bis-(dimethylamino)-phosphinyl)]-3-phenyl-1,2,4-triazol,
2,3-Dicyano-1,4-dithioanthrachinon,
2-Thio-1,3-dithiolo[4,5-b]chinoxalin,
1-(Butylcarbamoyl)2-benzimidazol)-carbaminsäuremethylester,
2-Methoxycarbonylamino-benzimidazol,
2-(Furyl-(2))-benzimidazol,
2-(Thiazolyl-(4))-benzimidazol,
N-(1,1,2,2-Tetrachlorethylthio)-tetrahydrophthalimid,
N-Trichlormethylthio-tetrahydrophthalimid,
N-Trichlormethylthio-phthalimid,
N-Dichlorfluormethylthio-N',N'-dimethyl-N-phenyl-schwefelsäurediamid,
5-Ethoxy-3-trichlormethyl-1,2,3-thiadiazol,
2-Rhodanmethylthiobenzthiazol,
1,4-Dichlor-2,5-dimethoxybenzol,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin,
2,3-Dihydro-5-carboxanilido-6-methyl-1,4-oxathiin-4,4-dioxid,
2-Methyl-5,6-dihydro-4H-pyran-3-carbonsäureanilid,
2-Methyl-furan-3-carbonsäureanilid,
2,5-Dimethyl-furan-3-carbonsäureanilid,
2,4,5-Trimethyl-furan-3-carbonsäureanilid,
2,5-Dimethyl-furan-3-carbonsäurecyclohexylamid,
N-Cyclohexyl-N-methoxy-2,5-dimethyl-furan-3-carbonsäureamid,
2-Methyl-benzoesäureanilid,
2-Jod-benzoesäureanilid,
N-Formyl-N-morpholin-2,2,2-trichlorethylacetat,
Piperazin-1,4-diylbis-(1-(2,2,2-trichlorethyl)-formamid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
N-[3-(p-tert.-Butylphenyl)-2-methylpropyl)-cis-2,6-dimethylmorpholin,
N-[3-(p-tert.-Butylphenyl)-2-methylpropyl]-piperidin,
1-[2-(2,4-Dichlorphenyl)-4-ethyl-1,3-dioxolan-2-yl-ethyl]-1H,1,2,4-triazol
1-[2-(2,4-Dichlorphenyl)-4-n-propyl)-1,3-dioxolan-2-yl-ethyl]-1H-1,2,4-triazol
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenyl)-3,3-dimethyl)-1-(1H-1,2,4-triazol-1-yl)-2-butanol,
α-(2-Chlorphenyl)-α-(4-chlorphenyl)-5-pyrimidinmethanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol,
sowie verschiedene Fungizide, wie
Dodecylguanidinacetat,
3-[3-(3,5-Dimethyl)-2-oxycyclohexyl)-2-hydroxyethyl)]glutarimid, Hexachlorbenzol,
DL-Methyl-N-(2,6-dimethylphenyl)-N-furoyl(2)-alaninat,
DL-N-(2,6-Dimethylphenyl)-N-(2'-methoxyacetyl)-alanin-methylester,
N-(2,6-Dimethylphenyl)-N-chloracetyl-D,L-2-aminobutyrolacton,
DL-N-(2,6-Dimethylphenyl)-N-(phenylacetyl)-alaninmethylester,
5-Methyl-5-vinyl-3-(3,5-dichlorphenyl)-2,4-dioxo-1,3-oxazolidin,
3-[3,5-Dichlorphenyl-(5-methyl-5-methoxymethyl]-1,3-oxazolidin-2,4-dion,
3-(3,5-Dichlorphenyl)-1-isopropylcarbamoylhydantoin,
N-(3,5-Dichlorphenyl)-1,2-dimethylcyclopropan-1,2-dicarbonsäureimid,
2-Cyano[N-(ethylaminocarbonyl)-2-methoximino)-acetamid,
1-[2-(2,4-Dichlorphenyl)-pentyl]-1H-1,2,4-triazol,
2,4-Difluor-α-(1H-1,2,4-triazolyl-1-methyl)-benzhydrylalkohol,
N-(3-Chlor-2,6-dinitro-4-trifluormethyl-phenyl)-5-trifluormethyl-3-chlor-2-aminopyridin,
1-((bis-(4-Fluorphenyl)-methylsilyl)-methyl-1H-1,2,4-triazol.

Die synergistische Wirkung der erfindungsgemäßen Mittel wird anhand der folgenden Anwendungsbeispiele erläutert, wobei als Wirkstoffe I die Verbindungen der Formeln I.1 bis I.7 zur Anwendung kamen:

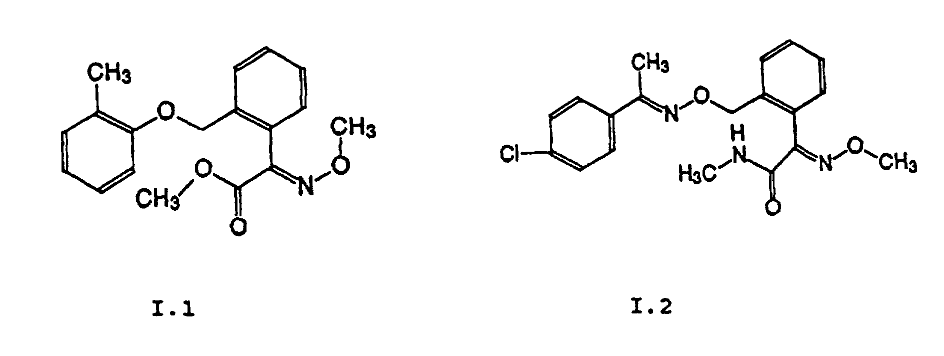

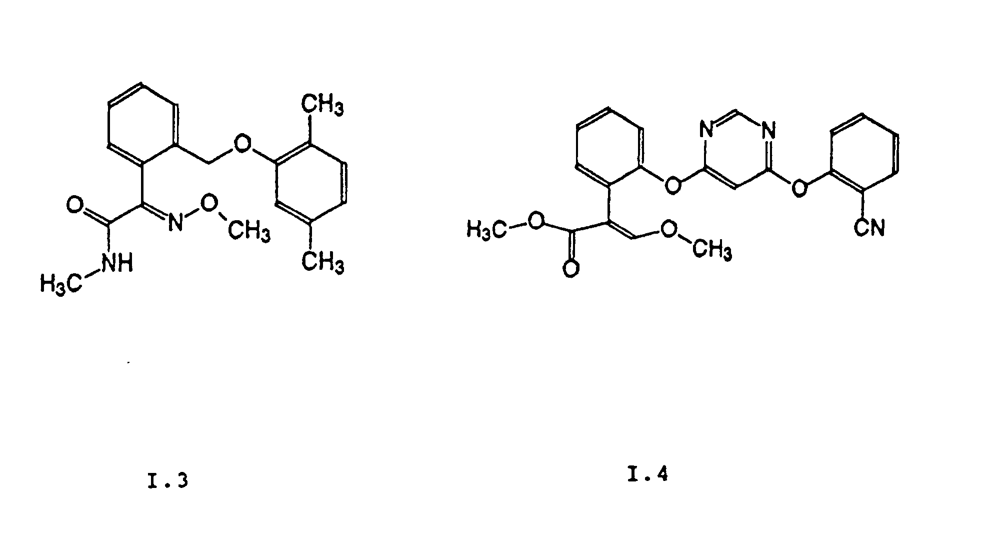

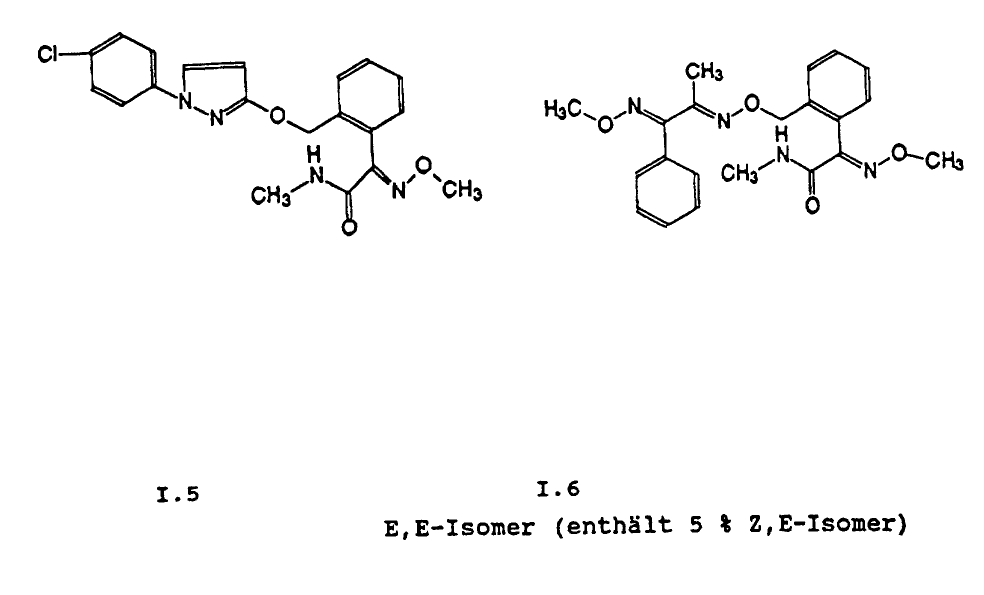

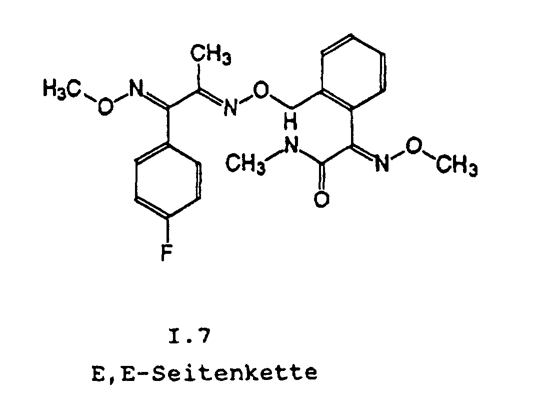

### Anwendungsbeispiel 1

### Wirksamkeit gegen Botrytis cinerea an Paprikaschoten

Scheiben von grünen Paprikaschoten wurden mit wäßriger Wirkstoffaufbereitung, die 80 % Wirkstoff und 20 % Emulgiermittel in der Trockensubstanz enthielt, tropfnaß besprüht. 2 Stunden nach dem Antrocknen des Spritzbelages wurden die Fruchtscheiben mit einer Sporensuspension von Botrytis cinerea, die 1,7 x 10⁶ Sporen pro ml einer 2 %igen Biomalzlösung enthielt, inokuliert. Die inokulierten Fruchtscheiben wurden anschließend in feuchten Kammern bei 18°C 4 Tage inkubiert. Dann erfolgte visuell die Auswertung der Botrytis-Entwicklung auf den befallenen Fruchtscheiben (99 % Befall).

Die visuell ermittelten Werte für den Prozentanteil befallener Fruchtfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in der nachfolgenden Tabelle 1 angegeben.

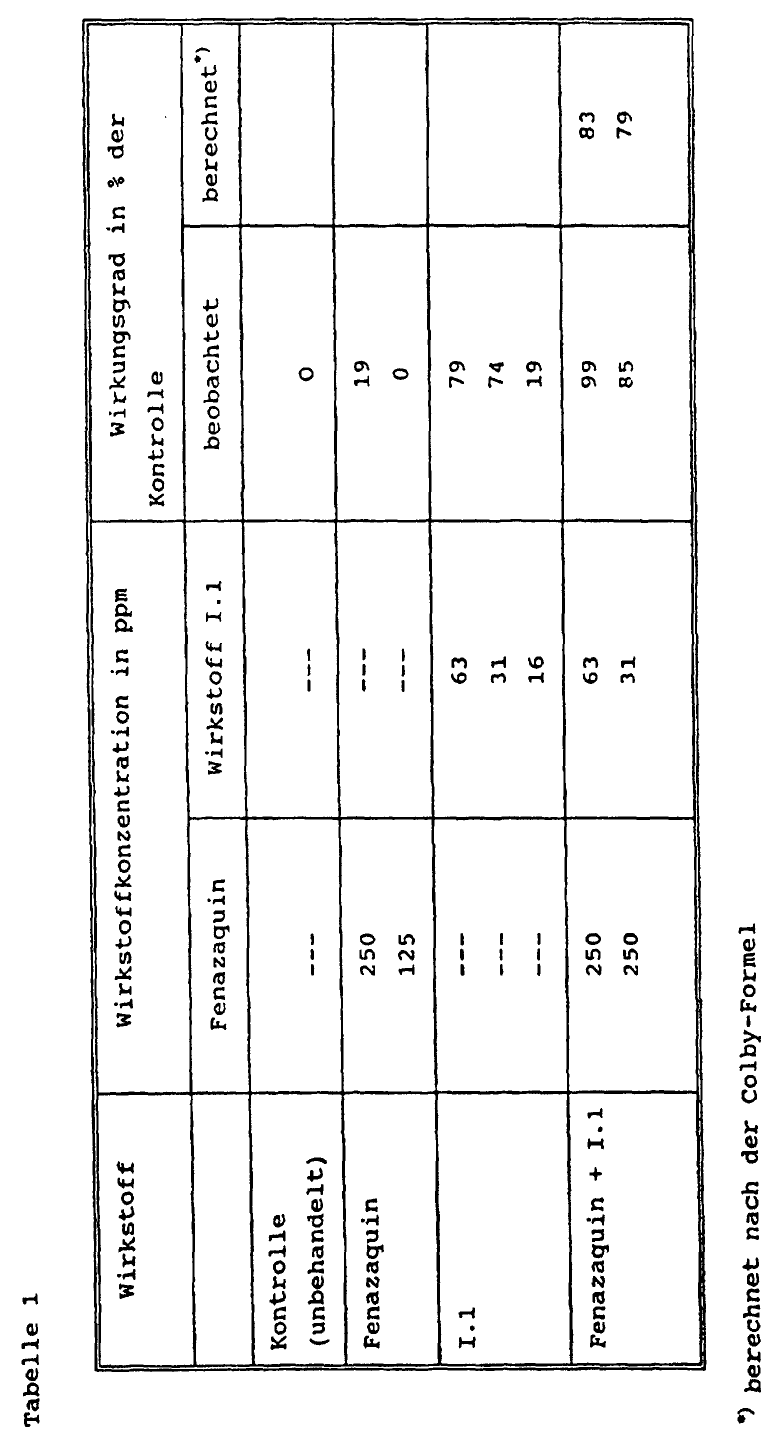

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

### Anwendungsbeispiel 2

### Wirksamkeit gegen Botrytis cinerea

Paprikasämlinge der Sorte "Neusiedler Ideal Elite" wurden, nachdem sich 4 - 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 - 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten (Befall 83 %).

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in den nachfolgenden Tabelle 2 angegeben.

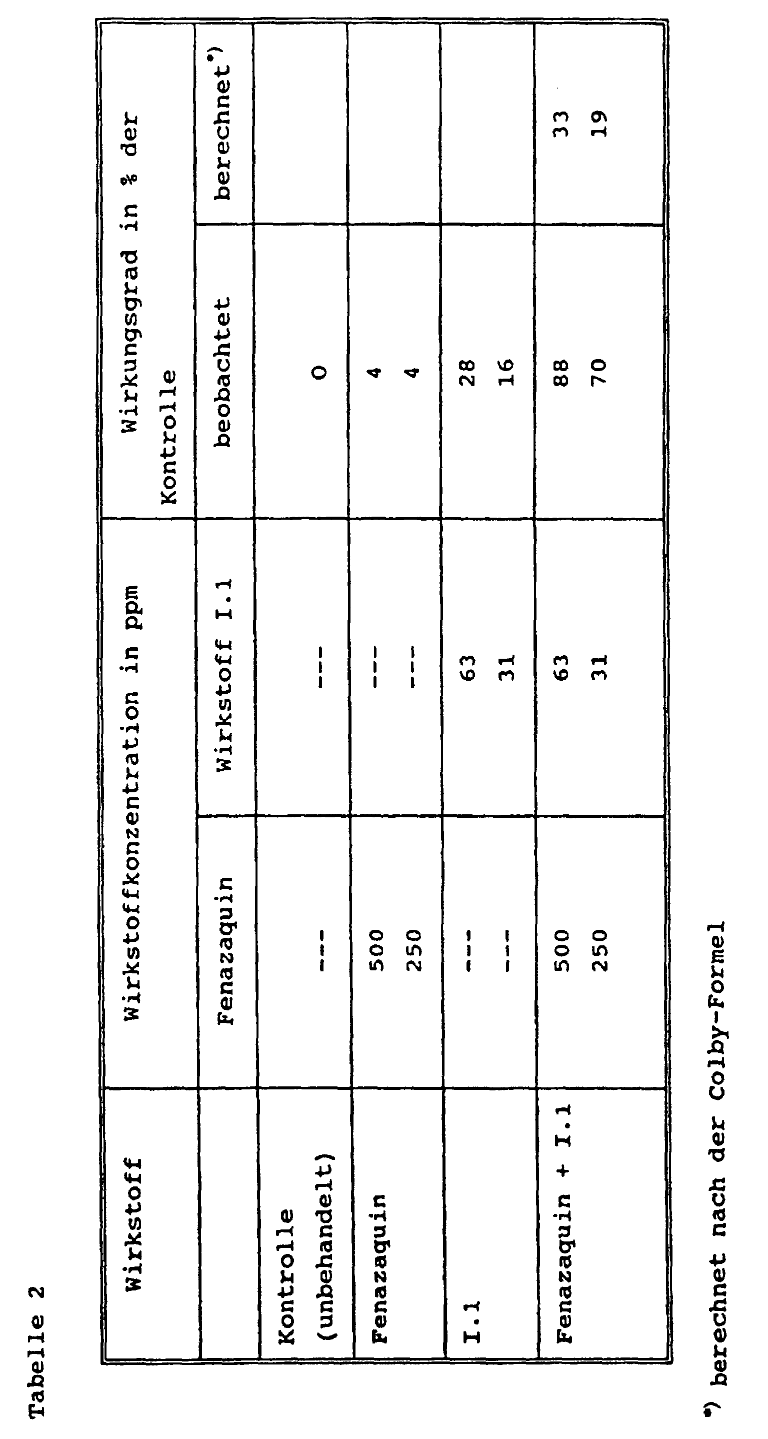

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

### Anwendungsbeispiel 3

### Wirksamkeit gegen Botrytis cinerea an Paprikaschoten

Nach der im Anwendungsbeispiel 1 beschriebenen Methode wurden unter Anwendung der in der nachfolgenden Tabelle 3 aufgeführten Verbindungen die folgenden Ergebnisse erhalten:

**Tabelle 3**

| Wirkstoff | Wirkstoffkonzentration % in ppm | | Wirkungsgrad in der Kontrolle | |
|---|---|---|---|---|
| | I.1-I.7 | Fenazaquin II | beobachtet | berechnet* |
| Kontrolle (unbehandelt) | -- | -- | 0 | |
| Fenazaquin II | -- | 500 250 50 25 | 0 0 0 0 | -- |
| I.2 | 50 25 | -- | 95 89 | -- |
| I.3 | 50 25 | -- | 79 28 | -- |
| I.4 | 50 25 | -- | 15 34 | -- |
| I.5 | 50 | -- | 60 | -- |
| I.6 | 50 25 | -- | 47 47 | -- |
| I.7 | 50 25 | -- | 34 42 | -- |
| I.2 + II | 25 25 | 250 25 | 100 95 | 89 89 |
| I.3 + II | 25 25 | 250 25 | 100 79 | 28 28 |
| I.4 + II | 25 25 | 250 25 | 79 66 | 34 34 |
| I.5 + II | 25 50 | 250 50 | 97 79 | 73 60 |
| I.6 + II | 25 25 | 250 25 | 97 76 | 47 47, |
| I.7 + II | 25 25 | 250 25 | 97 84 | 42 42 |

| | | | | |
|---|---|---|---|---|
| * berechnet nach der Colby-Formel | | | | |

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

### Anwendungsbeispiel 4

### Wirksamkeit gegen Botrytis cinerea

Nach der im Anwendungsbeispiel 1 beschriebenen Methode wurden unter Anwendung der in der nachfolgenden Tabelle 4 aufgeführten Verbindungen die folgenden Ergebnisse erhalten:

**Tabelle 4**

| Wirkstoff | Wirkstoffkonzentration in ppm | | Wirkungsgrad in % der Kontrolle | |
|---|---|---|---|---|
| | I.1-I.7 | Fenazaquin II | beobachtet | berechnet* |
| Kontrolle (unbehandelt) | | | 0 | |
| Fenazaquin II | | 500 250 50 25 | 48 27 34 17 | -- |
| I.2 | 25 | -- | 0 | -- |
| I.3 | 25 | -- | 34 | -- |
| 1.4 | 50 25 | -- | 0 0 | -- |
| I.5 | 50 25 | -- | 0 0 | -- |
| I.6 | 50 25 | -- | 52 72 | -- |
| I.7 | 25 | -- | 62 | |
| I.2 + II | 25 | 25 | 59 | 17 |
| I.3 + II | 25 | 25 | 65 | 46 |
| I.4 + II | 50 25 50 25 | 500 250 50 25 | 90 79 52 55 | 48 27 34 17 |
| I.5 + II | 50 25 | 50 25 | 52 52 | 34 17 |
| I.6 + II | 50 25 50 25 | 500 250 50 25 | 97 90 86 86 | 75 80 68 77 |
| I.7 + II | 25 | 25 | 90 | 68 |

| | | | | |
|---|---|---|---|---|
| * berechnet nach der Colby-Formel | | | | |

Aus den Ergebnissen des Versuches geht hervor, daß der beobachtete Wirkungsgrad in allen Mischungsverhältnissen höher ist als der nach der Colby-Formel vorausberechnte additive Wirkungsgrad, d.h. es liegt ein synergistischer Effekt vor.

Entsprechende Ergebnisse erhält man, wenn man in den oben beschriebenen Versuchen eine andere der in den obigen Tabellen I.1 bis I.8 genannten Einzelverbindungen einsetzt.

## Patentansprüche

1. Mittel zur Bekämpfung von Schadpilzen, das in einem festen oder flüssigen Träger
mindestens einen Wirkstoff I, der die Atmung am Cytochrom-Komplex III hemmt und Fenazaquin der Formel 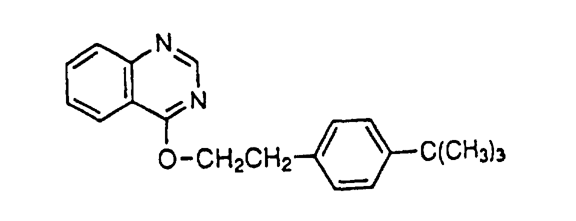 enthält.

2. Mittel nach Anspruch 1, das als Wirkstoff I eine Verbindung der Formel IA oder IB enthält 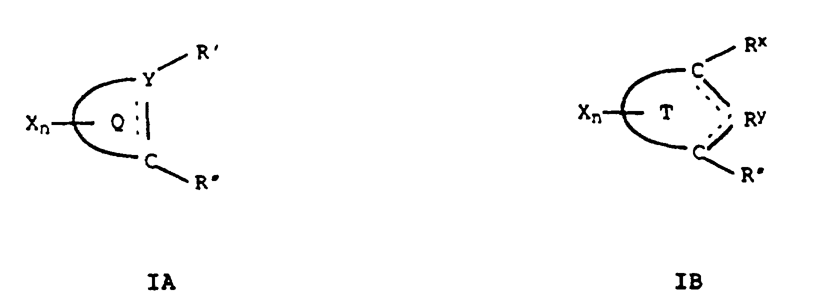 in denen .... für eine Doppel- oder Einfachbindung steht;
R' für -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃ oder -N(CH₂CH₃)-CO₂CH₃ steht;
R" für einen organischen Rest, welcher direkt oder über eine Oxy-, Mercapto-, Amino-, oder Alkylaminogruppe gebunden ist, steht oder
zusammen mit einer Gruppe X und dem Ring Q bzw. T, an den sie gebunden sind, ein ggf. substituiertes bicyclisches, partiell oder vollständig ungesättigtes System, welches neben Kohlenstoffringgliedern 1, 2 oder 3 Heteroatome, unabhängig ausgewählt unter Sauerstoff, Schwefel und Stickstoff, enthalten kann;
R^{x} für -OC [CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃] = CHOCH₃, -N(CH₃)C[CO₂CH₃]=NOCH₃, -CH₂C[CO₂CH₃]=CHOCH₃, -CH₂C[CO₂CH₃]=NOCH₃ oder -CH₂C[CONHCH₃]=NOCH₃ steht;
R^{y} für Sauerstoff, Schwefel, =CH- oder =N- steht;
n für 0, 1, 2 oder 3 steht, wobei die Reste X gleich oder verschieden sein können, wenn n > 1 ist;
X für Cyano, Nitro, Halogen, Alkyl, Halogenalkyl, Alkoxy, Halogenalkoxy, Alkylthio steht oder
wenn n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe bedeutet, wobei diese Ketten ihrerseits ein bis drei Reste tragen können, die unabhängig voneinander ausgewählt sind unter Halogen, Alkyl, Halogenalkyl, Alkoxy, Halogenalkoxy und Alkylthio;
Y für =C- oder -N- steht;
Q für Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl oder Triazinyl steht; und
T für Phenyl, Oxazolyl, Thiazolyl, Thiadiazolyl, Oxadiazolyl, Pyridinyl, Pyrimidinyl oder Triazinyl steht.

3. Mittel nach Anspruch 2, das als Wirkstoff I eine Verbindung der Formel IA oder IB enthält, worin R" für Aryloxy, Hetaryloxy, Aryloxymethylen, Hetaryloxymethylen, Arylethenylen oder Hetarylethenylen steht, wobei diese Reste gegebenenfalls 1, 2 oder 3 Substituenten aufweisen, die unabhängig voneinander ausgewählt sind unter Alkyl, Halogen, CF₃, CHF₂, CN, Alkoxy und Phenyl, das seinerseits 1, 2 oder 3 Substituenten aufweisen kann, die unabhängig voneinander ausgewählt sind unter Halogen, CF₃, CHF₂, Phenyl, CN, Phenoxy, Alkyl, Alkoxy und Halogenalkoxy;
oder R" für
CH₂ON=CR^{α}R^{β} oder CH₂ON=CR^{γ}CR^{δ}=NOR^{ε}
steht,
wobei R^{α} für Alkyl steht;
R^{β} für Phenyl, Pyridyl oder Pyrimidyl steht, das gegebenenfalls 1, 2 oder 3 Substituenten aufweist, die unabhängig voneinander ausgewählt sind unter Alkyl, Alkoxy, Halogen, Halogenalkoxy, CF₃ und CHF₂;
R^{γ} für Alkyl, Alkoxy, Halogen, Halogenalkyl oder Wasserstoff steht;
Rδ für Wasserstoff, Cyano, Halogen, Alkyl, Alkoxy, Alkylthio, Alkylamino, Di-Alkylamino, Alkenyl, Alkenyloxy, Alkenylthio, Alkenylamino, N-Alkenyl-N-alkylamino, Alkinyl, Alkinyloxy, Alkinylthio, Alkinylamino, N-Alkinyl-N-alkylamino, wobei die Kohlenwasserstoffreste dieser Gruppen partiell oder vollständig halogeniert sein können und/ oder 1, 2 oder 3 Reste tragen können, die unabhängig ausgewählt sind unter Cyano, Nitro, Hydroxy, Alkoxy, Halogenalkoxy, Alkoxycarbonyl, Alkylthio, Alkylamino, Di-alkylamino, Alkenyloxy, Cycloalkyl, Cycloalkyloxy, Heterocyclyl, Heterocyclyloxy, Aryl, Aryloxy, Aryl-alkoxy, Hetaryl, Hetaryloxy und Hetarylalkoxy, wobei die cyclischen Reste ihrerseits partiell oder vollständig halogeniert sein können und/oder 1, 2 oder 3 Gruppen tragen können, die unabhängig ausgewählt sind unter cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl und Alkenyloxy;
oder für Cycloalkyl, Cycloalkyloxy, Cycloalkylthio, Cycloalkylamino, N-Cycloalkyl-N-alkylamino, Heterocyclyl, Heterocyclyloxy, Heterocyclylthio, Heterocyclylamino, N-Heterocyclyl-N-alkylamino, Aryl, Aryloxy, Arylthio, Arylamino, N-Aryl-N-alkylamino, Hetaryl, Hetaryloxy, Hetarylthio, Hetarylamino oder N-Hetaryl-N-alkylamino steht, wobei die cyclischen Reste partiell oder vollständig halogeniert sein können und/oder 1, 2 oder 3 drei Gruppen tragen können, die unabhängig ausgewählt sind unter Cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl, Alkenyloxy, Benzyl, Benzyloxy, Aryl, Aryloxy, Hetaryl und Hetaryloxy, wobei die aromatischen Reste ihrerseits partiell oder vollständig halogeniert sein können und/oder 1, 2 oder 3 der folgenden Gruppen tragen können: Cyano, Alkyl, Halogenalkyl, Alkoxy, Nitro;
R^{ε} für Alkyl, Alkenyl oder Alkinyl steht, wobei diese Gruppen partiell oder vollständig halogeniert ein können und/oder 1, 2 oder 3 der folgenden Reste tragen können: Cyano, Alkoxy, Cycloalkyl.

4. Mittel nach Anspruch 2, das als Wirkstoff I eine Verbindung der Formel IA oder IB enthält, worin R" für Aryloxy, Hetaryloxy, Aryloxymethylen, Hetaryloxymethylen, Arylethenylen oder Hetarylethenylen steht, wobei diese Reste gegebenenfalls 1, 2 oder 3 Substituenten aufweisen, die unabhängig voneinander ausgewählt sind unter Alkyl, Halogen, CF₃, CHF₂, Alkoxy und Phenyl, das seinerseits 1, 2 oder 3 Substituenten aufweisen kann, die unabhängig voneinander ausgewählt sind unter Halogen, CF₃, CHF₂, Phenyl, CN und Phenoxy;
oder R" für
CH₂ON=CR^{α}R^{β} oder CH₂ON=CR^{γ}CR^{δ}=NOR^{ε}
steht,
wobei R^{α} für Alkyl steht;
R^{β} für Phenyl oder Pyrimidinyl steht, das gegebenenfalls 1, 2 oder 3 Substituenten aufweist, die unabhängig voneinander ausgewählt sind unter Alkyl, Alkoxy, Halogen, CF₃ und CHF₂;
R^{γ} für Alkyl steht;
R^{δ} für Alkyl oder Phenyl steht, das gegebenenfalls 1, 2 oder 3 Substituenten aufweist, die unabhängig voneinander ausgewählt sind unter Halogen, CF₃ und CHF₂; und
R^{ε} für Alkyl steht.

5. Mittel nach Anspruch 3, das als Wirkstoff I eine Verbindung der Formel IA enthält, worin R" eine der folgenden Bedeutungen besitzt:
a) Phenyloxymethylen, Pyridinyloxymethylen, Pyrimidinyloxymethylen oder Pyrazolyloxymethylen, wobei der aromatische Rest gegebenenfalls 1, 2 oder 3 Substituenten aufweist, die unabhängig voneinander ausgewählt sind unter Alkyl, Halogen, CF₃, CHF₂, -C(CH₃)=NOCH₃, und Phenyl, das gegebenenfalls mit 1, 2 oder 3 Halogenatomen und/oder Alkylgruppen substituiert ist;
b) Phenoxy oder Pyrimidinyloxy, das gegebenenfalls mit 1, 2 oder 3 Halogenatomen oder einem Phenoxyrest, der gegebenenfalls einen Halogen- oder Cyanosubstituenten aufweist, substituiert ist;
c) Phenylethenylen oder Pyrazolylethenylen, wobei der Phenyl- oder Pyrazolylrest gegebenenfalls 1, 2 oder 3 Substituenten aufweist, die unabhängig voneinander ausgewählt sind unter Halogen, CF₃, CHF₂ und Phenyl.
d) CH₂ON=CR^{α}R^{β,}
worin R^{α} für Alkyl steht; und
R^{β} für Phenyl, das gegebenenfalls 1, 2 oder 3 Substituenten aufweist, die unabhängig voneinander augewählt sind unter Alkyl, Halogen, CF₃ und CHF₂, oder für Pyrimidinyl steht, das gegebenenfalls durch 1 oder 2 Alkoxyreste substituiert ist;
e) CH₂ON=CR^{γ}CR^{δ}=NOR^{ε},
worin R^{γ} für Alkyl, Alkoxy oder Halogen steht; R^{δ} für Alkyl, Cyano, Halogen, Alkoxy, Alkenyl oder Phenyl, das gegebenenfalls durch 1, 2 oder 3 Halogenatome substituiert ist, steht; und
R^{ε} für Alkyl steht.

6. Mittel nach einem der Ansprüche 2 bis 5, wobei R' für -C[CO₂CH₃]=NOCH₃, -C[CONHCN₃]=NOCH₃ oder
-C[CO₂CH₃]=CHOCH₃ steht.

7. Mittel nach einem der Ansprüche 2 bis 6, das als Wirkstoff I eine Verbindung der Formel IA enthält, worin Q für Phenyl steht und n für 0 steht.

8. Mittel nach Anspruch 1, das als Wirkstoff I eine Verbindung der folgenden Formeln enthält:

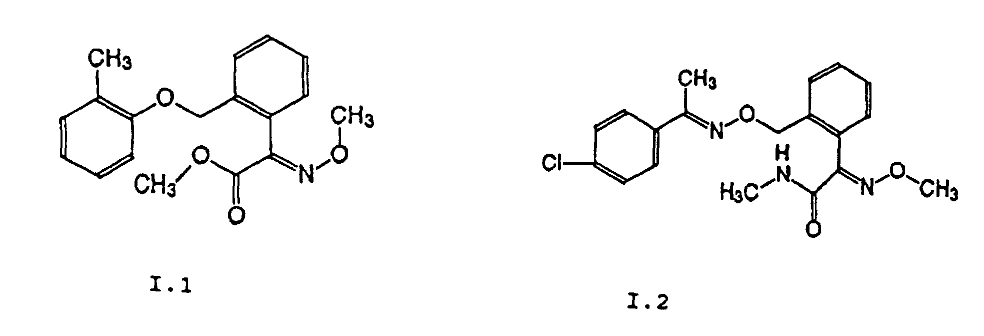

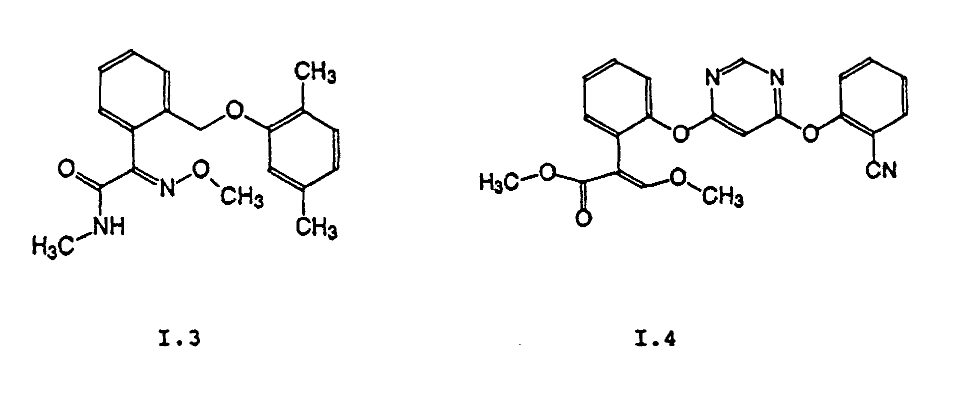

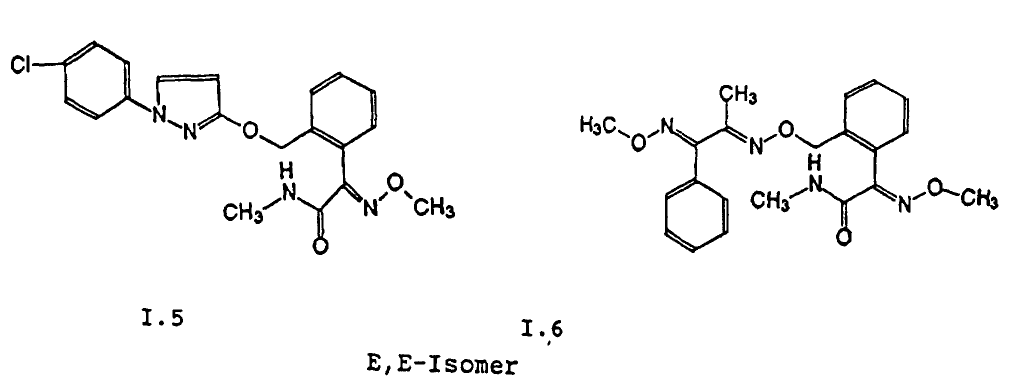

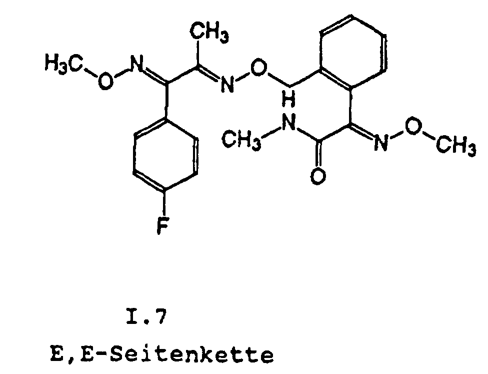

9. Mittel nach einem der vorhergehenden Ansprüche, das in zwei Teilen konditioniert ist, wobei der eine Teil den Wirkstoff I in einem festen oder flüssigen Träger enthält und der andere Teil Fenazaquin in einem festen oder flüssigen Träger enthält.

10. Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einem Mittel gemäß einem der Ansprüche 1 bis 9 behandelt, wobei die Anwendung der Wirkstoffe gleichzeitig, und zwar gemeinsam oder getrennt oder nacheinander erfolgen kann.

## Claims

1. A composition for controlling harmful fungi which comprises, in a solid or liquid carrier,
at least one active ingredient I, which inhibits respiration on the cytochrome complex III, and fenazaquin, of the formula.

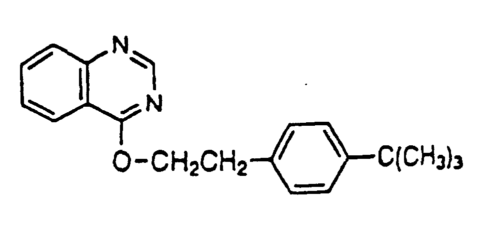

2. A composition as claimed in claim 1 which comprises, as active ingredient I, a compound of the formula IA or IB 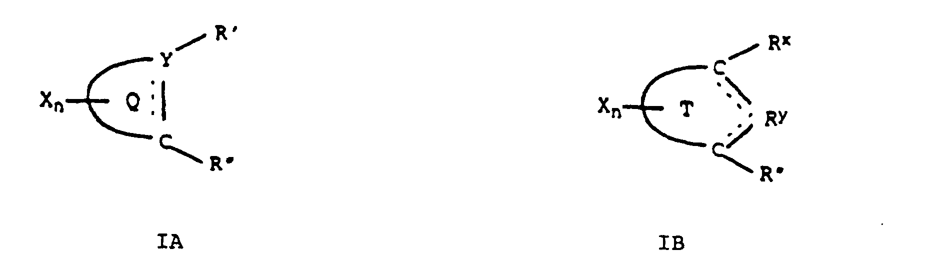 where .... is a double or single bond;
R' is -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃ or -N(CH₂CH₃)-CO₂CH₃;
R" is an organic radical which is bonded directly or via an oxy, mercapto, amino, or alkylamino group, or
together with a group X and the ring Q or T to which they are bonded form an unsubstituted or substituted bicyclic, partially or fully unsaturated system which, besides carbon ring members, can have 1, 2 or 3 hetero atoms independently selected from amongst oxygen, sulfur and nitrogen;
R^{x} is -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃ or -CH₂C[CONHCH₃]=NOCH₃;
R^{y} is oxygen, sulfur, =CH- or =N-;
n is 0, 1, 2 or 3, it being possible for the radicals X to be identical or different if n > 1;
x is cyano, nitro, halogen, alkyl, haloalkyl, alkoxy, haloalkoxy, alkylthio, or,
if n > 1, a C₃-C₅-alkylene; C₃-C₅-alkenylene, oxy-C₂-C₄-alkylene, oxy-C₁-C₃-alkyleneoxy, oxy-C₂-C₄-alkenylene, oxy-C₂-C₄-alkenyleneoxy or butadienediyl group which is bonded to two adjacent C atoms of the phenyl ring, it being possible for these chains, in turn, to have attached to them one to three radicals which, independently of one another, are selected from amongst halogen, alkyl, haloalkyl, alkoxy, haloalkoxy and alkylthio;
Y is =C- or -N-;
Q is phenyl, pyrrolyl, thienyl, furyl, pyrazolyl, imidazolyl, oxazolyl, isoxazolyl, thiazolyl, thiadiazolyl, triazolyl, pyridinyl, 2-pyridinyl, pyrimidinyl or triazinyl; and
T is phenyl, oxazolyl, thiazolyl, thiadiazolyl, oxadiazolyl, pyridinyl, pyrimidinyl or triazinyl.

3. A composition as claimed in claim 2 which comprises, as active ingredient I, a compound of the formula IA or IB where R" is aryloxy, hetaryloxy, aryloxymethylene, hetaryloxymethylene, arylethenylene or hetarylethenylene, it being possible for these radicals to have 1, 2 or 3 substituents which, independently of one another, are selected from amongst alkyl, halogen, CF₃, CHF₂, CN, alkoxy and phenyl which, in turn, may have 1, 2 or 3 substituents which, independently of one another, are selected from amongst halogen, CF₃, CHF₂, phenyl, CN, phenoxy, alkyl, alkoxy and haloalkoxy;
or R" is
CH₂ON=CR^{α}R^{β} or CH₂ON=CR^{γ}CR^{δ}=NOR^{ε}
where R^{α} is alkyl;
R^{β} is phenyl, pyridyl or pyrimidyl which may have 1, 2 or 3 substituents which, independently of one another, are selected from amongst alkyl, alkoxy, halogen, haloalkoxy, CF₃ and CHF₂;
R^{γ} is alkyl, alkoxy, halogen, haloalkyl or hydrogen;
R^{δ} is hydrogen, cyano, halogen, alkyl, alkoxy, alkylthio, alkylamino, di-alkylamino, alkenyl, alkenyloxy, alkenylthio, alkenylamino, N-alkenyl-N-alkylamino, alkynyl, alkynyloxy, alkynylthio, alkynylamino, N-alkynyl-N-alkylamino, it being possible for the hydrocarbon radicals of these groups to be partially or fully halogenated and/or to have attached to them 1, 2 or 3 radicals which, independently of one another, are selected from amongst cyano, nitro, hydroxyl, alkoxy, haloalkoxy, alkoxycarbonyl, alkylthio, alkylamino, di-alkylamino, alkenyloxy, cycloalkyl, cycloalkyloxy, heterocyclyl, heterocyclyloxy, aryl, aryloxy, arylalkoxy, hetaryl, hetaryloxy and hetarylalkoxy, it being possible for the cyclic radicals, in turn, to be partially or fully halogenated and/or to have attached to them 1, 2 or 3 groups which, independently of one another, are selected from amongst cyano, nitro, hydroxyl, alkyl, haloalkyl, cycloalkyl, alkoxy, haloalkoxy, alkoxycarbonyl, alkylthio, alkylamino, di-alkylamino, alkenyl and alkenyloxy;
or
is cycloalkyl, cycloalkyloxy, cycloalkylthio, cycloalkylamino, N-cycloalkyl-N-alkylamino, heterocyclyl, heterocyclyloxy, heterocyclylthio, heterocyclylamino, N-heterocyclyl-N-alkylamino, aryl, aryloxy, arylthio, arylamino, N-aryl-N-alkylamino, hetaryl, hetaryloxy, hetarylthio, hetarylamino or N-hetaryl-N-alkylamino it being possible for the cyclic radicals to be partially or fully halogenated and/or to have attached to them 1, 2 or 3 groups which, independently of one another, are selected from amongst cyano, nitro, hydroxyl, alkyl, haloalkyl, cycloalkyl, alkoxy, haloalkoxy, alkoxycarbonyl, alkylthio, alkylamino, di-alkylamino, alkenyl, alkenyloxy, benzyl, benzyloxy, aryl, aryloxy, hetaryl and hetaryloxy, it being possible for the aromatic radicals, in turn, to be partially or fully halogenated and/or to have attached to them 1, 2 or 3 of the following groups: cyano, alkyl, haloalkyl, alkoxy, nitro;
R^{ε} is alkyl, alkenyl or alkynyl, it being possible for these groups to be partially or fully halogenated and/or to have attached to them 1, 2 or 3 of the following radicals: cyano, alkoxy, cycloalkyl.

4. A composition as claimed in claim 2 which comprises, as active ingredient I, a compound of the formula IA or IB where R" is aryloxy, hetaryloxy, aryloxymethylene, hetaryloxymethylene, arylethenylene or hetarylethenylene, it being possible for these radicals to have 1, 2 or 3 substituents which, independently of one another, are selected from amongst alkyl, halogen, CF₃, CHF₂, alkoxy and phenyl which, in turn, may have 1, 2 or 3 substituents which, independently of one another are selected from amongst halogen, CF₃, CHF₂, phenyl, CN and phenoxy;
or R" is
CH₂ON=CR^{α}R^{β} or CH₂ON=CR^{γ} CR^{δ}=NOR^{ε}
where R^{α} is alkyl;
R^{β} is phenyl or pyrimidinyl which may have 1, 2 or 3 substituents which, independently of one another, are selected from amongst alkyl, alkoxy, halogen, CF₃ and CHF₂;
R^{γ} is alkyl;
R^{δ} is alkyl or phenyl which, if appropriate, has 1, 2 or 3 substituents which, independently of one another are selected from amongst halogen, CF₃ and CHF₂; and
R^{ε} is alkyl.

5. A composition as claimed in claim 3 which comprises, as active ingredient I, a compound of the formula IA where R" has one of the following meanings:
a) phenyloxymethylene, pyridinyloxymethylene, pyrimidinyloxymethylene or pyrazolyloxymethylene, it being possible for the aromatic radical to have 1, 2 or 3 substituents which, independently of one another, are selected from amongst alkyl, halogen, CF₃, CHF₂, -C(CH₃)=NOCH₃, and phenyl which is unsubstituted or substituted by 1, 2 or 3 halogen atoms and/or alkyl groups;
b) phenoxy or pyrimidinyloxy, unsubstituted or substituted by 1, 2 or 3 halogen atoms or one phenoxy radical which may have a halogen or cyano substituent;
c) phenylethenylene or pyrazolylethenylene, it being possible for the phenyl or pyrazolyl radical to have 1, 2 or 3 substituents which, independently of one another, are selected from amongst halogen, CF₃, CHF₂ and phenyl.
d) CH₂ON=CR^{α}R^{β},
where R^{α} is alkyl; and
R^{β} is phenyl which may have 1, 2 or 3 substituents which, independently of one another, are selected from amongst alkyl, halogen, CF₃ and CHF₂, or is pyrimidynyl which is unsubstituted or substituted by 1 or 2 alkoxy radicals;
e) CH₂ON=CR^{γ}CR^{δ}=NOR^{ε},
where R^{γ} is alkyl, alkoxy or halogen;
R^{δ} is alkyl, cyano, halogen, alkoxy, alkenyl or phenyl which is unsubstituted or substituted by 1, 2 or 3 halogen atoms; and
R^{ε} is alkyl.

6. A composition as claimed in any of claims 2 to 5, where R' is -C[CO₂CH₃]=NOCH₃, -C[CONHCN₃]=NOCH₃ or -C[CO₂CH₃]=CHOCH₃.

7. A composition as claimed in any of claims 2 to 6 which comprises, as active ingredient I, a compound of the formula IA where Q is phenyl and n is 0.

8. A composition as claimed in claim 1 which comprises, as active ingredient I, a compound of the following formulae:

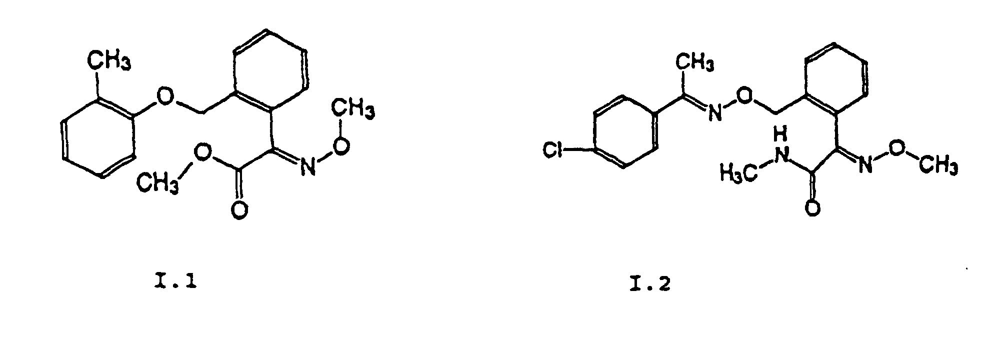

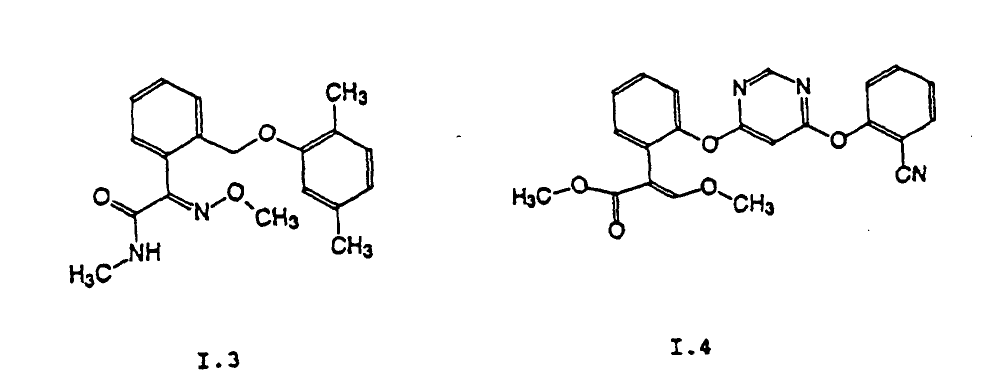

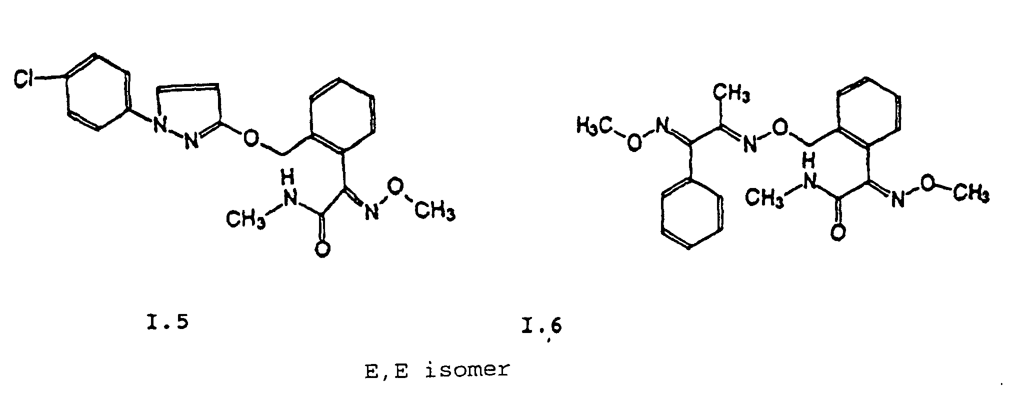

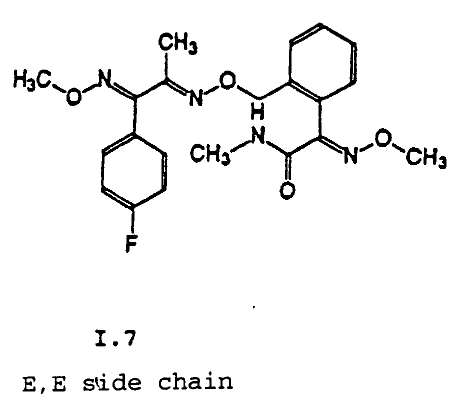

9. A composition as claimed in any of the preceding claims which is conditioned in two parts, one part comprising the active ingredient I in a solid or liquid carrier, while the other part comprises fenazaquin in a solid or liquid carrier.

10. A method of controlling harmful fungi, which comprises treating the fungi, their environment, or the materials, plants, seeds, soils, areas or spaces to be protected against fungal infection, with a composition as claimed in any of claims 1 to 9, it being possible for the application of the active ingredients to be effected simultaneously, i.e. jointly or separately, or in succession.

## Revendications

1. Produit pour combattre les mycètes nuisibles, qui contient, dans un véhicule solide ou liquide
au moins une substance active I qui inhibe la respiration au niveau du complexe cytochrome III et du Fenazaquin de formule

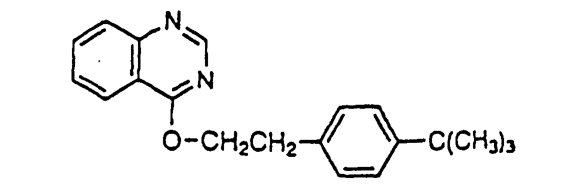

2. Produit selon la revendication 1 qui contient en tant que substance active I un composé de formule IA ou IB 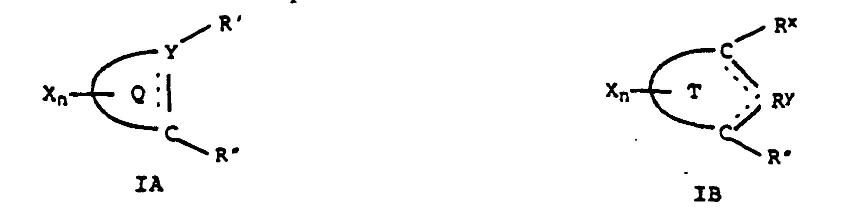 dans lesquelles ···· représente une liaison simple ou double ;
R' représente -[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃ ou -N(CH₂CH₃)-CO₂CH₃
R" représente un radical organique relié directement ou par l'intermédiaire d'un groupe oxy, mercapto, amino ou alkylamino, ou bien
il forme avec un groupe X et le cycle Q ou T auquel ils sont reliés un système bicyclique partiellement ou totalement insaturé et éventuellement substitué et qui, en plus des chaînons carbonés, peut contenir un, deux ou trois hétéroatomes choisis indépendamment les un des autres parmi l'oxygène, le soufre et l'azote ;
R^{x} représente -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃,-N(CH₃)C[CO₂CH₃]=NOCH₃, -CH₂C[CO₂CH₃]=CHOCH₃, -CH₂C[CO₂CH₃]=NOCH₃ ou -CH₂C[CONHCH₃]=NOCH₃ ;
R^{y} représente l'oxygène, le soufre, =CH- ou =N- ;
n est égal à 0, 1, 2 ou 3, les substituants X pouvant être identiques ou différents lorsque n est supérieur à 1 ;
X représente un groupe cyano, nitro, un halogène, un groupe alkyle, halogénoalkyle, alcoxy, halogénoalcoxy, alkylthio, ou bien
lorsque n est supérieur à 1, un groupe alkylène en C3-C5, alcénylène en C3-C5, oxy-alkylène en C2-C, oxy-alkylénoxy en C1-C3, oxyalcénylène en C2-C4, oxy-alcénylénoxy en C2-C4 ou butadiènediyle relié à deux atomes de carbone voisins du cycle phényle, ces chaînes pouvant elles-mêmes porter un à trois substituants choisis, indépendamment les uns des autres, parmi les halogènes, les groupes alkyle, halogénoalkyle, alcoxy, halogénoalcoxy et alkylthio ;
Y représente =C- ou -N- ;
Q représente un groupe phényle, pyrrolyle, thiényle, furyle, pyrazolyle, imidazolyle, oxazolyle, isoxazolyle, thiazolyle, thiadiazolyle, triazolyle, pyridinyle, 2-pyridonyle, pyrimidinyle ou triazinyle ; et
T représente un groupe phényle, oxazolyle, thiazolyle, thiadiazolyle, oxadiazolyle, pyridinyle, pyrimidinyle ou triazinyle.

3. Produit selon la revendication 2 qui contient, en tant que substance active I, un composé de formule IA ou IB dans laquelle R" représente un groupe aryloxy, hétéroaryloxy, aryloxyméthylène, hétéroaryloxyméthylène, aryléthénylène ou hétéroaryléthénylène, ces groupes pouvant le cas échéant porter un, deux ou trois substituants choisis, indépendamment les uns des autres, parmi les groupes alkyle, les halogènes, les groupces CF₃, CHF₂, CN, alcoxy et phényle, ce dernier pouvant lui-même porter un, deux ou trois substituants choisis, indépendamment les uns des autres, parmi les halogènes, les groupes CF₃, CHF₂, phényle, CN, phénoxy, alkyle, alcoxy et halogénoalcoxy ;
ou bien R" représente
CH₂ON=CR^{α}R^{β} ou CH₂ON=CR^{γ}CR^{δ}=NOR^{ε}
dans lesquels
R^{α} représente un groupe alkyle ;
R^{β} représente un groupe phényle, pyridyle ou pyrimidinyle portant le cas échéant un, deux ou trois substituants choisis, indépendamment les uns des autres, parmi les groupes alkyle, alcoxy, les halogènes, les groupes halogénoalcoxy, CF₃ et CHF₂ ;
R^{γ} représente un groupe alkyle, alcoxy, un halogène, un groupe halogénoalkyle ou l'hydrogène ;
R^{δ} représente l'hydrogène, un groupe cyano, un halogène, un groupe alkyle, alcoxy, alkylthio, alkylamino, dialkylamino, alcényle, alcényloxy, alcénylthio, alcénylamino, N-alcényl-N-alkylamino, alcynyle, alcynyloxy, alcynylthio, alcynylamino, N-alcényl-N-alkylamino, les parties hydrocarbonées de ces groupes pouvant être halogénées en totalité ou en partie et/ou pouvant porter un, deux ou trois substituants choisis, indépendamment les uns des autres, parmi les groupes cyano, nitro, hydroxy, alcoxy, halogénoalcoxy, alcoxycarbonyle, alkylthio, alkylamino, dialkylamino, alcényloxy, cycloalkyle, cycloalcoxy, hétérocyclyle, hétérocyclyloxy, aryle, aryloxy, arylalcoxy, hétéroaryle, hétéroaryloxy et hétéroarylalcoxy, les radicaux cycliques pouvant eux-mêmes être halogénés en totalité ou en partie et/ou pouvant porter un, deux ou trois substituants choisis, indépendamment les uns des autres, parmi les groupes cyano, nitro, hydroxy, alkyle, halogénoalkyle, cycloalkyle, alcoxy, halogénoalcoxy, alcoxycarbonyle, alkylthio, alkylamino, dialkylamino, alcényle et alcényloxy ;
ou bien un groupe cycloalkyle, cycloalcoxy, cycloalkylthio, cycloalkylamino, N-cycloalkyl-N-alkylamino, hétérocycle, hétérocyclyloxy, hétérocyclylthio, hétérocyclylamino, N-hétérocyclyl-N-alkylamino, aryle, aryloxy, arylthio, arylamino, N-aryl-N-alkylamino, hétéroaryle, hétéroaryloxy, hétéroarylthio, hétéroarylamino ou N-hétéroaryl-N-alkylamino, les radicaux cycliques pouvant être halogénés en totalité ou en partie et/ou pouvant porter un, deux ou trois substituants choisis, indépendamment les uns des autres, parmi les groupes cyano, nitro, hydroxy, alkyle, halogénoalkyle, cycloalkyle, alcoxy, halogénoalcoxy, alcoxycarbonyle, alkylthio, alkylamino, dialkylamino, alcényle, alcényloxy, benzyle, benzyloxy, aryle, aryloxy, hétéroaryle et hétéroaryloxy, les radicaux aromatiques pouvant eux-mêmes être halogénés en totalité ou en partie et/ou pouvant porter un, deux ou trois des substituants suivants : cyano, alkyle, halogénoalkyle, alcoxy, nitro ;
R^{ε} représente un groupe alkyle, alcényle ou alcynyle, ces groupes pouvant être halogénés en totalité ou en partie et/ou pouvant porter un, deux ou trois des substituants suivants : cyano, alcoxy, cycloalkyle.

4. Produit selon la revendication 2, contenant, en tant que substance active I, un composé de formule IA ou IB dans laquelle R" représente un groupe aryloxy, hétéroaryloxy, aryloxyméthylène, hétéroaryloxyméthylène, aryléthénylène ou hétéroaryléthénylène, ces groupes portant le cas échéant un, deux ou trois substituants choisis, indépendamment les uns des autres, parmi les groupes alkyle, les halogènes, les groupes CF₃, CHF₂, alcoxy et phényle, ce dernier pouvant lui-même porter un, deux ou trois substituants choisis, indépendamment les uns des autres, parmi les halogènes, les groupes CF₃, CHF₂, phényle, CN ou phénoxy ;
ou bien R" représente
CH₂ON=CR^{α}R^{β} ou CH₂ON=CR^{γ}CR^{δ}=NOR^{ε}
R^{α} représente un groupe alkyle ;
R^{β} représente un groupe phényle ou pyrimidinyle qui porte le cas échéant un, deux ou trois substituants choisis, indépendamment les uns des autres, parmi les groupes alkyle, alcoxy, les halogènes, les groupes CF₃ et CHF₂ ;
R^{γ} représente un groupe alkyle ;
R^{δ} représente un groupe alkyle ou phényle qui porte le cas échéant un, deux ou trois substituants choisis, indépendamment les uns des autres, parmi les halogènes, les groupes CF₃ et CHF₂ ; et
R^{ε} représente un groupe alkyle.

5. Produit selon la revendication 3, contenant, en tant que substance active I, un composé de formule IA dans laquelle R" représente l'un des groupes suivants :
a) phényloxyméthylène, pyridinyloxyméthylène, pyrimidinyloxyméthylène ou pyrazolyloxyméthylène, le radical aromatique portant le cas échéant un, deux ou trois substituants choisis, indépendamment les uns des autres, parmi les groupes alkyle, les halogènes, les groupes CF₃, CHF₂, -C(CH₃)=NOCH₃ et phényle, lequel peut le cas échéant porter un, deux ou trois substituants halogéno et/ou alkyle ;
b) phénoxy ou pyrimidinyloxy, portant le cas échéant un, deux ou trois atomes d'halogènes ou un groupe phénoxy, lequel porte le cas échéant un substituant halogéno ou cyano ;
c) phényléthénylène ou pyrazolyléthénylène, la partie phényle ou pyrazolyle portant le cas échéant un, deux ou trois substituants choisis, indépendamment les uns des autres, parmi les halogènes, les groupes CF₃, CHF₂ et phényle ;
d) CH₂ON=CR^{α}R^{β},
dans lequel R^{α} représente un groupe alkyle, et
R^{β} représente un groupe phényle portant le cas échéant un, deux ou trois substituants choisis, indépendamment les uns des autres, parmi les groupes alkyle, les halogènes, les groupes CF₃ et CHF₂, ou un groupe pyrimidinyle portant le cas échéant un ou deux substituants alcoxy ;
e) CH₂ON=CR^{γ}CR^{δ}=NOR^{ε},
dans lequel R^{γ} représente un groupe alkyle, alcoxy ou un halogène ;
R^{δ} représente un groupe alkyle, cyano, un halogène, un groupe alcoxy, alcényle ou phényle qui peut le cas échéant porter un, deux ou trois substituants halogéno ;
et
R^{ε} représente un groupe alkyle.

6. Produit selon l'une des revendications 2 à 5, pour lequel R' représente -C[CO₂CH₃]=NOCH₃, -C[CONHCN₃]=NOCH₃ ou -C[CO₂CH₃]=CHOCH₃.

7. Produit selon l'une des revendications 2 à 6, contenant en tant que substance active I un compose de formule IA dans laquelle Q représente un groupe phényle et n est égal à 0.

8. Produit selon la revendication 1, contenant en tant que substance active I un composé répondant à l'une des formules suivantes :

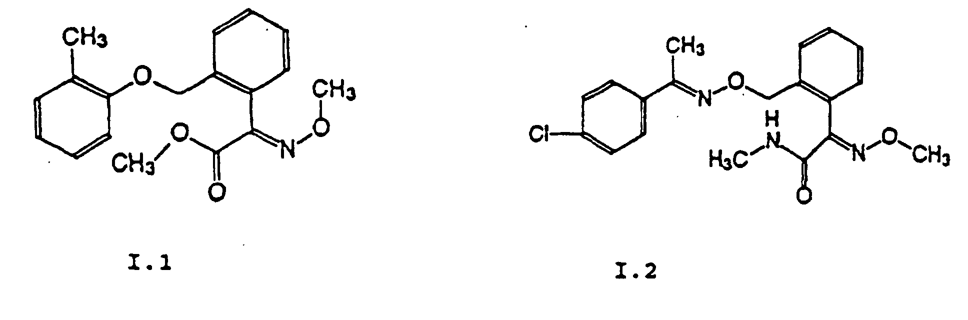

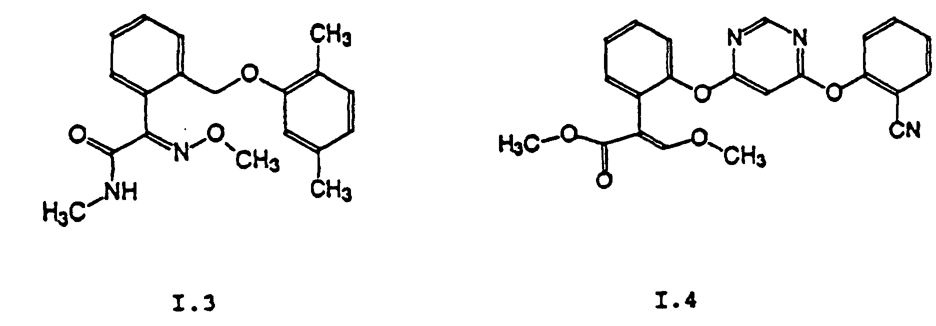

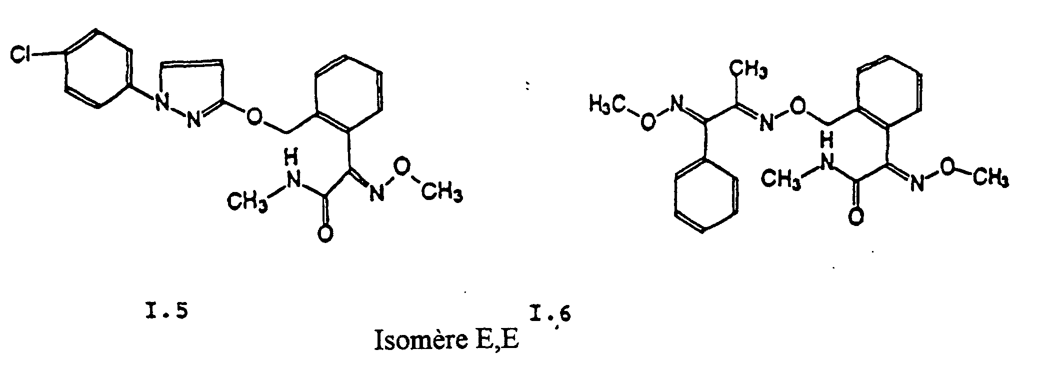

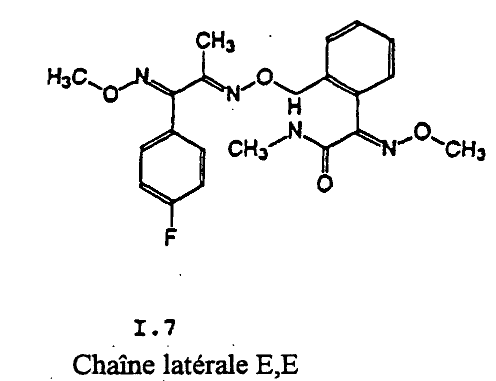

9. Produit selon l'une des revendications qui précèdent, qui est conditionné en deux parties dont l'une contient la substance active I dans un véhicule solide ou liquide et l'autre le Fenazaquin dans un véhicule solide ou liquide.

10. Procédé pour combattre les mycètes nuisibles, **caractérisé par le fait que** l'on traite les mycètes, leur habitat ou les matériaux, végétaux, semences, sols, aires ou locaux qu'on veut protéger contre les mycètes par un produit selon l'une des revendications 1 à 9, les substances actives étant appliquées simultanément, ensemble ou séparément, ou successivement.
